# EUROPEAN PATENT SPECIFICATION

(11) **EP 4 249 851 B1**
(45) Date of publication and mention of the grant of the patent: **26.11.2025**
(21) Application number: 23163063.3
(22) Date of filing: 21.03.2023
(51) Int. Cl.: G01C 21/00

(54) **AUTONOMOUS VEHICLE NAVIGATION USING MAP FRAGMENTS**
AUTONOME FAHRZEUGNAVIGATION UNTER VERWENDUNG VON KARTENFRAGMENTEN
NAVIGATION DE VÉHICULE AUTONOME À L'AIDE DE FRAGMENTS DE CARTE

(30) Priority: 22.03.2022 US 202217655818
(43) Date of publication of application: 27.09.2023
(73) Proprietor: HERE Global B.V., 5611 ZT Eindhoven (NL)
(72) Inventor: STENNETH, Leon, Chicago, 60606 (US); NAYAK, Amarnath, Chicago, 60606 (US); AVERBUCH, Alex, Chicago, 60606 (US); RAUT, Advait, Chicago, 60606 (US)
(74) Representative: Potter Clarkson

(56) References cited:
- EP-A1- 3 832 422
- WO-A1-2018/126079
- US-A1- 2018 340 792
- US-A1- 2019 227 567
- US-A1- 2020 201 899

## Description

### TECHNOLOGICAL FIELD

Example embodiments relate generally to autonomous vehicle navigation. An example embodiment relates generally to the use of non-connected/non-contiguous map fragments for navigation. US 2018/0340792 A1 relates to methods, systems, and apparatuses for adaptive download of map information including obtaining a route from a start location to a destination location for a vehicle, acquiring projected environmental information associated with a first portion in the route the vehicle is expected to traverse, acquiring projected network availability information associated with a second portion in the route the vehicle is expected to traverse, and determining whether to download map information associated with the first portion of the route based on the projected environmental information and the projected network availability information.

### BACKGROUND

Autonomous vehicle navigation generally requires that a vehicle apparatus onboard a vehicle be able to perform navigation-related functions (e.g., highly accurate positioning, maneuver determination and performance, etc.) based on sensor data captured by sensors coupled to the vehicle and a high definition map stored by the vehicle apparatus. The high definition map is a highly detailed map that has a limited lifespan. For example, some of the information included in the high definition map may only be expected to be accurate for a limited period of time (a minute to an hour, for example). However, due to the highly detailed nature of the high definition map, transmitting portions of the high definition map (e.g., from the Cloud and/or a server) to the vehicle apparatus uses a significant amount of bandwidth.

### BRIEF SUMMARY OF SOME EXAMPLE EMBODIMENTS

Various embodiments provide for the use of non-connected and/or non-contiguous map fragments that enable autonomous operation of vehicles while significantly reducing the amount of bandwidth used to provide and/or transmit portions of the high definition map to the respective vehicle apparatuses and decreasing the amount of memory used by the respective vehicle apparatuses to store portions of the high definition map. The invention is defined by the appended claims.

### BRIEF DESCRIPTION OF THE DRAWINGS

Having thus described certain example embodiments in general terms, reference will hereinafter be made to the accompanying drawings, which are not necessarily drawn to scale, and wherein:
Figure 1 is a block diagram showing an example architecture of one embodiment of the present invention;
Figure 2A is a block diagram of a network apparatus that may be specifically configured in accordance with an example embodiment;
Figure 2B is a block diagram of a vehicle apparatus that may be specifically configured in accordance with an example embodiment;
Figure 3 is a conceptional diagram illustrating not connected and/or non-contiguous map fragments, in accordance with an example embodiment;
Figure 4 is a flowchart illustrating operations performed, such as by the vehicle apparatus of Figure 2B to control one or more systems of a vehicle, in accordance with an example embodiment;
Figure 5 is a flowchart illustrating operations performed, such as by the network apparatus of Figure 2A to identify areas where sensor data is expected to be not sufficient for operation of the vehicle apparatus in the sensor-based navigation mode, in accordance with an example embodiment;
Figure 6 is a flowchart illustrating operations performed, such as by the network apparatus of Figure 2A and/or the vehicle apparatus of Figure 2B to cause the vehicle apparatus to obtain a respective map fragment, in accordance with an example embodiment.

### DETAILED DESCRIPTION OF SOME EXAMPLE EMBODIMENTS

Some embodiments will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. The term "or" (also denoted "/") is used herein in both the alternative and conjunctive sense, unless otherwise indicated. The terms "illustrative" and "exemplary" are used to be examples with no indication of quality level. Like reference numerals refer to like elements throughout. As used herein, the terms "data," "content," "information," and similar terms may be used interchangeably to refer to data capable of being transmitted, received and/or stored in accordance with embodiments of the present invention. As used herein, the terms "substantially" and "approximately" refer to values that are within manufacturing and/or engineering guidelines and/or limits. Thus, use of any such terms should not be taken to limit the scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware.

### I. General Overview

Methods, apparatus, and computer program products are provided in accordance with various embodiments in order to enable autonomous operation of a vehicle. In various embodiments, a vehicle apparatus is configured to operate a vehicle in a sensor-based navigation mode when the one or more sensors coupled to the vehicle are able to capture sensor data that is sufficient for operating in the sensor-based navigation mode, and to obtain and use a high definition map fragment (referred to as a map fragment herein) to operate the vehicle in a map-based navigation mode in areas where the one or more sensors coupled to the vehicle are not able to capture sensor data that is sufficient for operating in the sensor-based navigation mode. In various embodiments, the map fragments obtained and/or used by the vehicle apparatus are not connected (e.g., via the topology of the portions of the traversable network represented by the map fragments) and/or non-contiguous. For example, the map fragments obtained and/or used by the vehicle apparatus are not connected to one another by traversable network topology map data (e.g., map data corresponding to TMEs of the traversable network) of the two or more map fragments. In other words, for a first map fragment and a second map fragment of the two or more map fragments, a vehicle must traverse a portion of a geographical region that is an area where it is expected that the sensors coupled to the vehicle will be able to capture sensor data that is sufficient for autonomous operation of the vehicle in a sensor-based navigation mode between a first area corresponding to the first map fragment and a second area corresponding to the second map fragment. For example, it is not possible to pass directly from the first area corresponding to the first map fragment into the second area corresponding to the second map fragment via the traversable network.

As used herein, operating in a sensor-based navigation mode does not require the use of map data of a high definition map. For example, in various embodiments, the vehicle apparatus does not have map data of a high definition map in portions of a geographical region where the vehicle apparatus is operating in the sensor-based navigation mode. Thus, when operating in the sensor-based navigation mode, the vehicle apparatus operates the vehicle and/or one or more systems thereof based on sensor data captured by the one or more sensors coupled to the vehicle and in communication with the vehicle apparatus and without the use of map data of a high definition map. As used herein, operating in a map-based navigation mode includes operating the vehicle and/or one or more systems thereof based at least in part on map data of a high definition map. For example, the vehicle apparatus may obtain a map fragment comprising map data of a high definition map for a respective area and, while in the respective area, the vehicle operates the vehicle and/or one or more systems thereof based on the map data of the map fragment (e.g., in a map-based navigation mode).

Various embodiments, provide methods, apparatus, and computer program products configured to identify areas where the sensors coupled to a vehicle are not able to capture sensor data that is sufficient for operating in the sensor-based navigation mode. Various embodiments provide methods, apparatus, and computer program products configured to cause a vehicle apparatus to obtain one or more map fragments. In various embodiments, the vehicle apparatus is caused to obtain one or more map fragments such that it is expected that the vehicle apparatus will be located within respective areas corresponding to the one or more map fragments during respective time periods when the respect map fragment is expected to be valid, accurate, and/or up-to-date.

High definition maps used by vehicle apparatuses to operate a vehicle in an autonomous manner are very detailed and therefore require a significant amount of memory for the vehicle apparatus to store and/or a significant amount of bandwidth to provide/transmit to the vehicle apparatus. Additionally, many of the details in the high definition map are time dependent such that a portion of a high definition map may only be valid, accurate, and/or up-to-date for a period of time on the order of a minute to fifteen minutes, for example. Due to the large amount of bandwidth required for providing a vehicle apparatus configured to operate a vehicle in an autonomous manner with a high definition map, providing high definition maps to vehicle apparatuses is a technical problem in the field of autonomous driving and/or vehicle operation.

Various embodiments provide technical solutions to these technical problems. In particular, areas are identified where it is expected that sensor data captured by one or more sensors coupled to a vehicle will not be sufficient for corresponding vehicle apparatus to operate the vehicle in an autonomous manner. Respective map fragments of the high definition map that correspond to respective areas where it is expected that sensor data captured by one or more sensors coupled to a vehicle will not be sufficient for corresponding vehicle apparatus to operate the vehicle in an autonomous manner are generated and provided to a vehicle apparatus. As a result, the vehicle apparatus operates in a sensor-based navigation mode wherever the sensor data captured by one or more sensors coupled to the respective vehicle and in communication with the vehicle apparatus enables automated navigation of the vehicle. The vehicle apparatus obtains map fragments (e.g., not connected and/or non-contiguous portions of a high definition map stored and/or maintained by a server and/or Cloud-based service) corresponding to isolated areas where the sensor data captured by the one or more sensors is not sufficient to enable operation in the sensor-based navigation mode and/or where it is expected that the sensor data captured by the one or more sensors may not be sufficient to enable operation in the sensor-based navigation mode. Thus, for the isolated areas where the sensor data captured by the one or more sensors is not sufficient to enable operation in the sensor-based navigation mode, the map data of the respective map fragment is used while the vehicle apparatus operates in a map-based navigation mode. Thus, the amount of data transmitted to the vehicle apparatus is minimized while still enabling automated operation of the vehicle.

### II. Example System Architecture

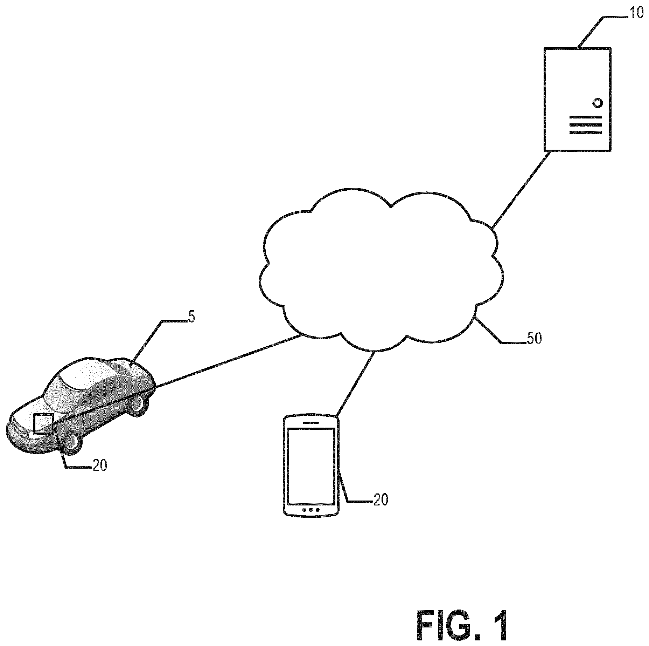

Figure 1 provides an illustration of an example system that can be used in conjunction with various embodiments of the present invention. As shown in Figure 1, the system may include one or more network apparatuses 10, one or more vehicle apparatuses 20, and/or the like. In various embodiments, a vehicle apparatus 20 may be onboard and/or coupled to a vehicle 5. In various embodiments, the vehicle apparatus 20 may be an in vehicle navigation system, vehicle control system, a mobile computing device, a mobile data gathering platform, and/or the like. For example, a vehicle apparatus 20 may be an in vehicle navigation system mounted within and/or be onboard a vehicle 5 such as a motor vehicle, non-motor vehicle, automobile, car, scooter, truck, van, bus, motorcycle, bicycle, Segway, golf cart, and/or the like. In an example embodiment, the vehicle apparatus 20 may be a vehicle control system configured to autonomously drive a vehicle 5, assist in control of a vehicle 5, monitor various aspects of the vehicle 5 (e.g., fault conditions, motor oil status, battery charge level, fuel tank fill level, and/or the like) and/or the like. For example, the vehicle apparatus 20 is configured to operate one or more systems of the vehicle 5 as the vehicle 5 operates in an autonomous driving/navigation mode (e.g., sensor-based navigation mode, map-based navigation mode, and/or the like). For example, the one or more systems of the vehicle 5 may include a steering system, a speed control (e.g., acceleration/deceleration) system, adaptive cruise control, a lane maintenance system, a lane change system, and/or other systems used to perform autonomous operation of the vehicle. In various embodiments, the vehicle apparatus 20 is configured to autonomously drive a vehicle 5 and may perform multiple functions that are similar to those performed by a vehicle apparatus 20 configured to be an ADAS (e.g., lane keeping, lane change assistance, maintaining a lane, merging, etc.).

In some embodiments, a vehicle apparatus 20 may be onboard a personal vehicle, commercial vehicle, public transportation vehicle, fleet vehicle, and/or other vehicle. In various embodiments, the vehicle apparatus 20 may be an in-vehicle navigation device, smartphone, tablet, personal digital assistant (PDA), personal computer, desktop computer, laptop, and/or other mobile computing device. In an example embodiment, a vehicle apparatus 20 is onboard and/or coupled to a vehicle 5 and is used to perform one or more navigation functions corresponding to the vehicle 5 traversing at least a portion of a road network. In an example embodiment, the network apparatus 10 is a server, group of servers, distributed computing system, part of a Cloud-based service and/or system, and/or other computing system. In an example embodiment, the network apparatus 10 is not located onboard a vehicle. For example, the network apparatus 10 may be in communication with one or more vehicle apparatuses 20 and/or the like via one or more wired or wireless networks 50.

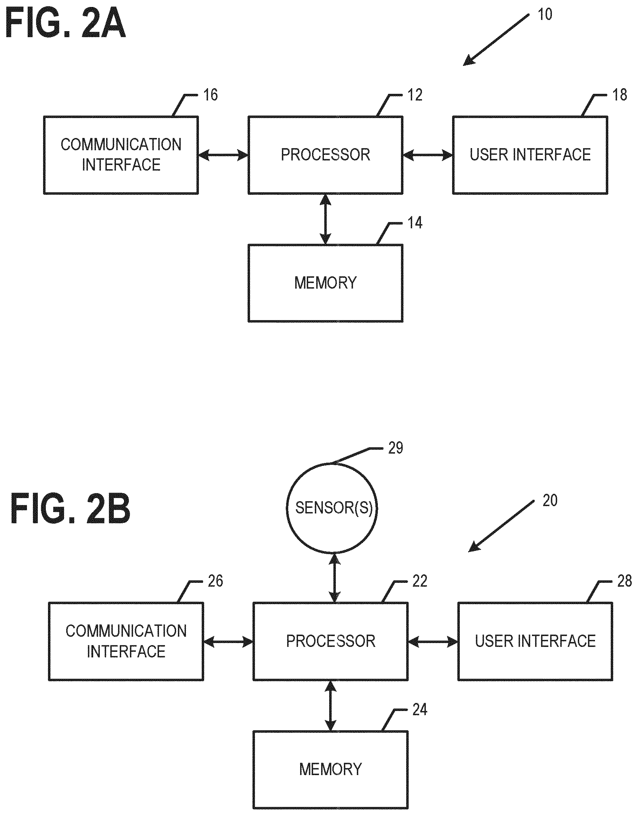

In an example embodiment, a network apparatus 10 may comprise components similar to those shown in the example network apparatus 10 diagrammed in Figure 2A. In an example embodiment, the network apparatus 10 is configured to obtain sensor function data and determine road topology scenarios, static feature scenarios, weather conditions, and/or driving conditions for which sensor data capturable by one or more sensors coupled to a vehicle 5 is not sufficient for operation of a corresponding vehicle apparatus 20 in a sensor-based navigation mode; generate, maintain, and/or store a high definition map; determine when to provide one or more map fragments to a vehicle apparatus 20; generate one or more map fragments from the high definition map and provide the one or more map fragments such that a respective vehicle apparatus 20 receives the map fragments; and/or the like. For example, as shown in Figure 2A, the network apparatus 10 may comprise a processor 12, memory 14, a user interface 18, a communications interface 16, and/or other components configured to perform various operations, procedures, functions or the like described herein. In various embodiments, the network apparatus 10 stores a network version of a digital map (e.g., in memory 14). In at least some example embodiments, the memory 14 is non-transitory.

In an example embodiment, a vehicle apparatus 20 is an in-vehicle navigation system, vehicle control system, and/or other mobile computing entity configured to control at least one system of a vehicle 5. For example, in various embodiments, a vehicle apparatus 20 is onboard and/or coupled to a vehicle 5. In various embodiments, the vehicle 5 is capable of automated navigation (e.g., the vehicle 5 is a self-driving vehicle) and the vehicle apparatus 20 is configured to control at least one system of the vehicle 5 while the vehicle 5 is navigating and/or operating autonomously. For example, the vehicle apparatus 20 autonomously navigates and/or operates the vehicle 5, in an example embodiment.

In an example embodiment, the vehicle apparatus 20 is configured to determine a current location of the vehicle apparatus and/or receive user input indicating an origin of a route; receive user input indicating a destination of a route and/or predict a destination; generate and provide a route and/or map fragment request; receive a route and/or one or more map fragments; cause the vehicle 5 to be operated in a sensor-based navigation mode or a map-based navigation mode based on a location of the vehicle apparatus 20 and/or vehicle 5, the sufficiency of sensor data captured by one or more sensors coupled to the vehicle 5 for performing sensor-based navigation; and/or the like.

In an example embodiment, as shown in Figure 2B, the vehicle apparatus 20 comprises a processor 22, memory 24, a communications interface 26, a user interface 28, one or more sensors 29 (e.g., a location sensor such as a GNSS sensor; IMU sensors; camera(s); image sensors; two dimensional (2D) and/or three dimensional (3D) light detection and ranging (LiDAR)(s); long, medium, and/or short range radio detection and ranging (RADAR); ultrasonic sensors; electromagnetic sensors; (near-) infrared (IR) cameras; 3D cameras; 360° cameras; fuel level sensors; vehicle system sensors (e.g., oil status sensors, tire pressure sensors, engine oil pressure sensors, coolant level sensors, engine/coolant temperature sensors, and/or other sensors that enable the vehicle apparatus 20 to determine the location of the vehicle apparatus 20 and/or one or more features of the corresponding vehicle's 5 surroundings and/or monitor the vehicle's 5 operating parameters), and/or other components configured to perform various operations, procedures, functions or the like described herein. In various embodiments, the vehicle apparatus 20 stores (e.g., in memory 24) a basic map (and/or portions thereof) that is not a high definition map and that includes traversable map elements (TMEs) representing the road segments and/or traversable lanes of at least a portion of a road network and that indicates how the TMEs are connected to one another. However, the basic map is not a high definition map and does not provide a sufficient level of detail for map-based autonomous navigation. In various embodiments, the map data of the basic map is expected to be valid, accurate, and/or up-to-date for an extended period of time (e.g. weeks, months, years). For example, the basic map may provide a high level representation of the topology of the traversable network. For example, the map data of the basic map is not expected to substantially change during the time that a vehicle 5 is traversing a route, whereas the map data of a high definition map may substantially change during the time that a vehicle 5 is a traversing a route. In at least some example embodiments, the memory 24 is non-transitory.

Each of the components of the system may be in electronic communication with, for example, one another over the same or different wireless or wired networks 50 including, for example, a wired or wireless Personal Area Network (PAN), Local Area Network (LAN), Metropolitan Area Network (MAN), Wide Area Network (WAN), cellular network, and/or the like. In some embodiments, a network 50 may comprise the automotive cloud, digital transportation infrastructure (DTI), radio data system (RDS)/ high definition (HD) radio or other digital radio system, and/or the like. For example, a vehicle apparatus 20 may be in communication with a network apparatus 10 via the network 50. For example, a vehicle apparatus 20 may communicate with the network apparatus 10 via a network, such as the Cloud. For example, the Cloud may be a computer network that provides shared computer processing resources and data to computers and other devices connected thereto. For example, the vehicle apparatus 20 may be configured to provide one or more route requests via the network 50. For example, the network apparatus 10 may configured to receive one or more route requests and provide corresponding route responses and/or map fragments via the network 50. For example, a vehicle apparatus 20 may be configured to receive a route response and/or one or more map fragments via the network 50.

Certain example embodiments of the network apparatus 10 and/or vehicle apparatus 20 are described in more detail below with respect to Figures 2A and 2B.

### III. Example Operation

Methods, apparatus, and computer program products are provided in accordance with various embodiments in order to enable autonomous operation of a vehicle. In various embodiments, a vehicle apparatus is configured to operate a vehicle in a sensor-based navigation mode when the one or more sensors coupled to the vehicle are able to capture sensor data that is sufficient for operating in the sensor-based navigation mode, and to obtain and use a high definition map fragment (referred to as a map fragment herein) to operate the vehicle in a map-based navigation mode in areas where the one or more sensors coupled to the vehicle are not able to capture sensor data that is sufficient for operating in the sensor-based navigation mode. In various embodiments, the map fragments obtained and/or used by the vehicle apparatus are not connected (e.g., via the topology of the portions of the traversable network represented by the map fragments) and/or non-contiguous.

Various embodiments, provide methods, apparatus, and computer program products configured to identify areas where the sensors coupled to a vehicle are not able to capture sensor data that is sufficient for operating in the sensor-based navigation mode. Various embodiments provide methods, apparatus, and computer program products configured to cause a vehicle apparatus to obtain one or more map fragments. In various embodiments, the vehicle apparatus is caused to obtain one or more map fragments such that it is expected that the vehicle apparatus will be located within respective areas corresponding to the one or more map fragments during respective time periods when the respect map fragment is expected to be valid, accurate, and/or up-to-date.

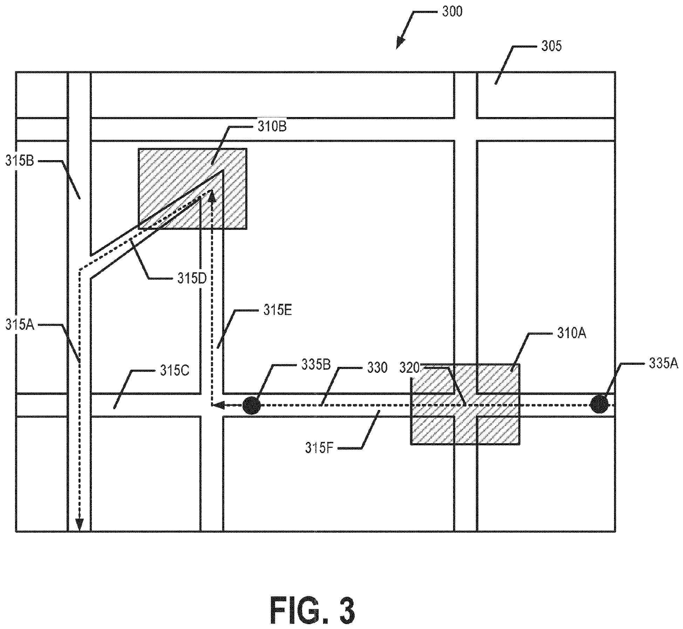

For example, Figure 3 provides an illustration of an example geographical region 300 corresponding to a high definition map that is generated, maintained, and/or stored by a network apparatus 10. The vehicle apparatus 20 is coupled to a vehicle 5 and is navigating the vehicle 5 along the dotted line representing route 330 in an autonomous manner. The geographical region 300 comprises a plurality of TMEs 315 (e.g., 315A-F) (e.g., corresponding to/representing road segments, travel lanes, and/or the like), some of which are included in route 330 and some of which are not. In the unshaded portions 305 of the geographical region 300 it is expected that one or more sensors 29 coupled to the vehicle 5 and in communication with the vehicle apparatus 20 (e.g., in communication with processor 22) are able to capture sensor data that is sufficient (e.g., of sufficient quality and including sufficient detail(s)) for the vehicle apparatus 20 to autonomously operate the vehicle 5 in a sensor-based navigation mode. For example, based at least in part on one or more of the traversable network topology, static features (e.g., features that are expected to substantially change over the course of an extended period of time of a month, a few months, a year, and/or the like) in the geographical region, current and/or expected weather and/or driving conditions (e.g., weather and/or driving conditions expected for when the vehicle 5 is expected to be located in the portions 305, and/or the like), capabilities of the sensors 29 coupled to the vehicle 5 and/or in communication with the vehicle apparatus 20, and/or the like, it is expected that the sensors 29 will be able to capture sensor data sufficient for the vehicle apparatus 20 to autonomously operate the vehicle 5 (and/or one or more systems thereof) in a sensor-based navigation mode through the portions 305 of the geographical region 300.

However, in areas 310 (e.g., 310A, 310B) it is expected that the sensors 29 will not be able capture sensor data that is sufficient for the vehicle apparatus 20 to autonomously operate the vehicle 5 (and/or one or more systems thereof) in a sensor-based navigation mode through the portions 305 of the geographical region 300. For example, a hill or a sharp turn may prevent the sensors 29 from being able to capture sensor data that includes sufficient details of the upcoming road way for the vehicle apparatus 20 to autonomously operate the vehicle 5 (and/or one or more systems thereof) in a sensor-based navigation mode through the portions 310 of the geographical region 300. For example, in area 310B, the road way goes around a sharp curve that prevents the collection of sensor data corresponding to at least part of TME 315D until the vehicle 5 has traversed the sharp turn. In another example, static features (e.g., buildings, structures, signs, and/or other physical features that are expected to be at least semi-permanent) may block the sensors ability to capture sensor data providing details regarding the upcoming road way. For example, a large sign located at intersection 320 may block the sensors 29 field of view such that the sensors 29 are not able to capture sensor data corresponding to a portion of TME 315F until after passing the sign. In another example, weather conditions such as heavy snow or fog or sun glare when the sun is located close to the horizon in an area may prevent the sensors 29 from being able to capture sensor data that includes sufficient details of the road way and/or environment around the vehicle 5 for the vehicle apparatus 20 to autonomously operate the vehicle 5 (and/or one or more systems thereof) in a sensor-based navigation mode through the portions 310 of the geographical region 300. In another example, driving conditions such as construction events, traffic events that block the view of various sensors, pop-up sidewalk shops, and/or other temporary situations that are not directly related to the weather may prevent the sensors 29 from being able to capture sensor data that includes sufficient details of the road way and/or environment around the vehicle 5 for the vehicle apparatus 20 to autonomously operate the vehicle 5 (and/or one or more systems thereof) in a sensor-based navigation mode through the portions 310 of the geographical region 300.

In an example embodiment, as the vehicle 5 traverses the route 330, the vehicle apparatus 20 obtains (e.g., requests and receives and/or is provided with (e.g., via a push method and/or the like)) map fragments corresponding to the respective areas 310. In the illustrated embodiments, the vehicle apparatus 20 obtains a map fragment such that it is expected that the map data of the map fragment will still be valid, accurate, and/or up-to-date while the vehicle apparatus 20 is using the map data of the map fragment to traverse the respective area. For example, when it is determined that the vehicle 5 has reached point 335A, it may be determined (by the vehicle apparatus 20 or the network apparatus 10) that a trigger has been identified that causes the vehicle apparatus 20 to obtain a map fragment corresponding to the area 310A. For example, the vehicle apparatus 20 may request the map fragment corresponding to area 310A responsive to determining that the trigger has been identified and then receive the map fragment in response to the request. For example, the network apparatus 10 may provide (e.g., transmit) the map fragment responsive to determining that the trigger has been identified such that the vehicle apparatus 20 receives the map fragment. Similarly, when it is determined that the vehicle 5 has reached point 335B along route 330, it may be determined (by the vehicle apparatus 20 or the network apparatus 10) that a trigger has been identified and, responsive thereto, the vehicle apparatus 20 obtains a map fragment corresponding to the area 310B.

In an example embodiment, the vehicle apparatus 20 switches from autonomously operating the vehicle 5 (and/or one or more systems thereof) in the sensor-based navigation mode to the map-based navigation mode responsive to determining that the vehicle apparatus 20 is located in an area 310 corresponding to a map fragment that is present (and still valid as indicated by time to live metadata stored in association with the map fragment) in the memory 24.

In an example embodiment, the vehicle apparatus 20 switches from autonomously operating the vehicle 5 (and/or one or more systems thereof) in the sensor-based navigation mode to the map-based navigation mode responsive to determining that the sensor data captured by the one or more sensors 29 is not sufficient for operating in the sensor-based navigation mode and determining that the vehicle apparatus 20 is located in an area 310 corresponding to a map fragment that is present (and still valid as indicated by time to live metadata stored in association with the map fragment) in the memory 24.

In an example embodiment, when the vehicle apparatus 20 determines that the sensor data captured by the one or more sensors 29 is not sufficient for operating in the sensor-based navigation mode but that a (valid) map fragment is not present in the memory 24, the vehicle apparatus 20 may request a map fragment from the network apparatus 10, provide an indication to the network apparatus 10 that the one or more sensors 29 are not able to capture sensor data that is sufficient for operation in the sensor-based navigation mode at the vehicle apparatus's 20 current location, request that a human operator take over control of at least one system of the vehicle 5, and/or the like. As used herein, a map fragment is considered valid when the time to live metadata stored in association with the map fragment indicates that the map data of the map fragment is still expected to be accurate and/or up-to-date (e.g., the map fragment has not yet expired).

As can be seen in Figure 3, the areas 310A and 310B are not contiguous and are not directly connected to one another by the TMEs of the traversable network. For example, the areas 310A and 310B are not connected to one another via traversable network topology map data (e.g., map data corresponding to TMEs 315) of the two or more map fragments. For example, for a vehicle 5 to pass from the area 310A to the area 310B, the vehicle 5 must pass through at least a portion 305 of the geographical region 300 that is outside of the areas 310. For example, the respective map fragments corresponding to the areas 310A and 310B are not contiguous and are not directly connected to one another by TMEs of the high definition map. In other words, the vehicle apparatus 20 only obtains high definition map fragments corresponding to isolated areas 310 of the geographical region 300, rather than for the geographical region 300 as a whole. For example, the geographical region 300 may correspond to a tile of a high definition map and the map fragments may correspond to areas that are smaller than the tile.

### A. Example Operation of one or more Systems of a Vehicle by a Vehicle Apparatus

In various embodiments, the vehicle apparatus 20 is configured to autonomously operate one or more systems of a vehicle 5 in a sensor-based navigation mode, when one or more sensors 29 coupled to the vehicle are able to capture sensor data sufficient to enable sensor-based navigation mode, or a map-based navigation mode, when such is enabled by the availability of a (valid) map fragment corresponding to a respective area.

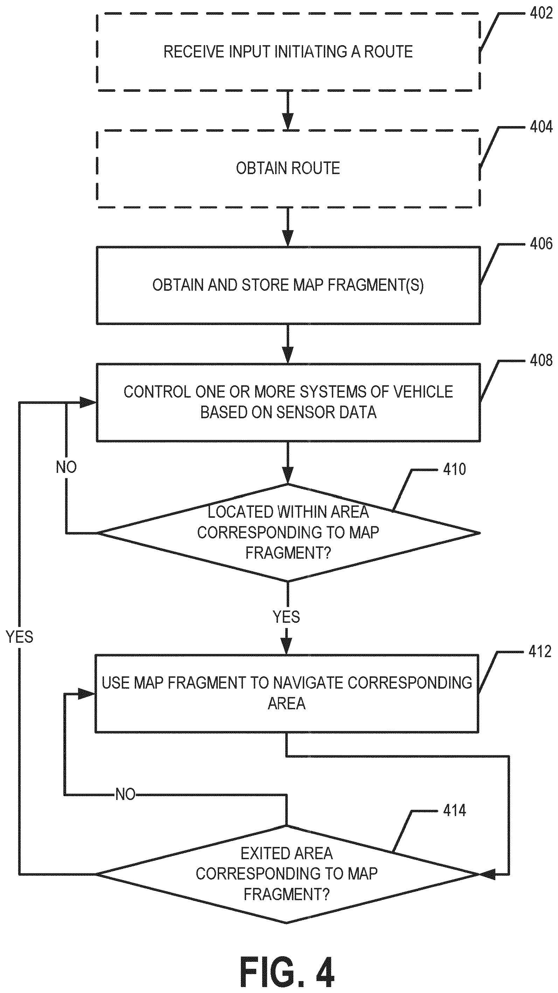

Figure 4 provides a flowchart illustrating various processes, procedures, operations, and/or the like performed by the vehicle apparatus 20 to autonomously operate the vehicle 5, in an example embodiment. Starting at block 402, the vehicle apparatus 20 receives input initiating the traversal of a route. For example, the vehicle apparatus 20 may receive input indicating that the vehicle 5 should be autonomously operated from the current location of the vehicle 5 and/or vehicle apparatus 20 to an indicated destination location. In an example embodiment, the input is received as user input (e.g., via a user interface of the vehicle apparatus 20). In an example embodiment, the input is received as a communication from another computing entity. For example, the input may be generated based on an event on an electronic calendar stored on a computing entity (e.g., PDA, smartphone, tablet, laptop, and/or the like) associated with the vehicle 5 and/or carried onboard the vehicle 5 by a user. In another example, a server may request the vehicle 5 be transported to an indicated destination location via autonomous operation of the vehicle. In an example embodiment, the destination is a predicted destination that is predicted based on user history and/or other data sources. For example, the vehicle apparatus 20 comprises means, such as processor 22, memory 24, communications interface 26, user interface 28, and/or the like, for receiving input initiating the traversal of a route.

In an example embodiment, at block 404, the vehicle apparatus 20 obtains a route to be traversed from the location of the vehicle apparatus 20 (or another origin location) to the destination location. In an example embodiment, the vehicle apparatus 20 uses basic map data stored by the vehicle apparatus 20 to determine a route from the location of the vehicle apparatus 20 (or another origin location) to the destination location. In an example embodiment, the vehicle apparatus 20 receives a route from the location of the vehicle apparatus 20 (or another origin location) to the destination location that was generated and/or determined by the network device 10 and provided (e.g., transmitted) by the network device 10 such that the vehicle apparatus 20 receives the route. In various embodiments, the network device 10 may provide the route via an application programming interface (API) call, API response, using a push method, and/or the like. For example, the vehicle apparatus 20 comprises means, such as processor 22, memory 24, communications 26, and/or the like, for obtaining a route.

At block 406, the vehicle apparatus 20 obtains one or more map fragments corresponding to respective areas along the route where it is expected that the sensors 29 coupled to the vehicle 5 while not be able to capture sensor data that is sufficient (e.g., of sufficient quality and/or that includes sufficient detail) to enable vehicle apparatus 20 to autonomously operate the vehicle 5 (and/or one or more systems thereof) in a sensor-based navigation mode in the respective areas. For example, the vehicle apparatus 20 comprises means, such as processor 22, memory 24, communications interface 26, and/or the like, for obtaining map fragments corresponding to respective areas along the route. In various embodiments, the received map fragments are stored in memory 24 and/or held available for use by the processor 22.

In an example embodiment, the vehicle apparatus 20 receives one or more map fragments in association with the route. For example, one or more map fragments may be provided for receipt by the vehicle apparatus 20 in a same communication as the route. In an example embodiment, the vehicle apparatus 20 receives one or more map fragments after the route is obtained and before the vehicle 5 starts to traverse the route. For example, the vehicle apparatus 20 may be parked at a house or building where the vehicle apparatus 20 can access a Wi-Fi network and may receive one or more map fragments over the Wi-Fi network. In an example embodiment, the vehicle apparatus 20 receives one or more map fragments while the vehicle apparatus 20 is traversing the route. For example, as described with respect to Figure 3, the vehicle apparatus 20 may receive a map fragment corresponding to a respective area along the route when it is determined that the vehicle 5 is approaching the respective area (e.g., is within a particular distance of the area, is expected to enter and/or be located within the area in a particular amount of time, and/or the like). In various embodiments, the network apparatus 10 provides one or more map fragments such that the vehicle apparatus 20 obtains (e.g., receives) the one or more map fragments such that the map fragments are expected to be valid, accurate, and/or up-to-date when the vehicle 5 is expected and/or predicted to be located in the respective areas along the route corresponding to the respective map fragments. For example, the timing of when the vehicle apparatus 20 obtains (e.g., receives) a map fragment may be determined based at least in part on an amount of time for which the map data of a map fragment is expected to be valid, accurate, and/or up-to-date (e.g., indicated by time to live metadata stored in association with the map fragment and/or time to live information associated with the high definition map). The timing of when the network apparatus 10 provides (e.g., transmits) a map fragment may further be determined based at least in part on an expected amount of time needed to transmit the map fragment and for the vehicle apparatus 20 to receive and process the map fragment, the speed at which the vehicle apparatus 20 is traveling, and/or the like.

Continuing with Figure 4, at block 408, the vehicle apparatus 20 controls one or more systems of the vehicle 5 to cause the vehicle 5 to traverse at least a portion of the route in a sensor-based navigation mode. For example, the vehicle apparatus 20 comprises means, such as processor 22, memory 24, sensors 29, and/or the like, for autonomously operating the vehicle 5 (and/or one or more systems thereof) in a sensor-based navigation mode as the vehicle 5 traverses at least a portion of the route. In various embodiments, operating in the sensor-based navigation mode comprises causing the sensors 29 to capture sensor data, processing the sensor data (e.g., by executing computer-executable instructions stored in memory 24 by processor 22), and making navigation decisions (e.g., by executing computer-executable instructions stored in memory 24 by processor 22) based on the results of processing the sensor data. For example, when operating in a sensor-based navigation mode, the vehicle apparatus 20 does not use map data of a high definition map to make navigation decisions.

At block 410, the vehicle apparatus 20 determines whether it is located within an area for which the sensors 29 are not able to or are expected to not be able to capture sensor data sufficient for enabling operation of the vehicle apparatus 20 in the sensor-based navigation mode. For example, the vehicle apparatus 20 comprises means, such as processor 22, memory 24, sensors 29, and/or the like for determining whether the vehicle apparatus 20 is located within an area for which the sensors 29 are not able to capture sensor data sufficient for enabling operation of the vehicle apparatus 20 in the sensor-based navigation mode. In an example embodiment, the vehicle apparatus 20 determines whether the vehicle apparatus 20 is located within a respective corresponding to a map fragment stored in memory 24. In an example embodiment, the vehicle apparatus 20 determines whether the sensor data being captured by the sensors 29 coupled to the vehicle 5 is sufficient (e.g., of sufficient quality and/or including sufficient details) for enabling operation of the vehicle apparatus 20 in the sensor-based navigation mode. In an example embodiment, a map fragment comprises computer-executable instructions that trigger the switching of the operation of the vehicle apparatus 20 from the sensor-based navigation mode to the map-based navigation mode when the vehicle apparatus 20 enters the area corresponding to the map fragment.

When, at block 410, it is determined that the vehicle apparatus 20 is not located within an area for which the sensors are not able to or are expected to not be able to capture sensor data sufficient for enabling operation of the vehicle apparatus 20 in the sensor-based navigation mode the process returns to block 406 and/or 408. For example, when it is determined that the sensor data captured by the sensors 29 is sufficient for enabling autonomous operation of the vehicle 5 (and/or one or more systems thereof), by the vehicle apparatus 20 in the sensor-based navigation mode, the vehicle apparatus 20 continues to operate in the sensor-based navigation mode, in an example embodiment. In another example, when it is determined that a map fragment corresponding to the current location of the vehicle 5 is not present (e.g., in memory 24) and the sensor data captured by the sensors 29 is sufficient for enabling autonomous operation of the vehicle 5 (and/or one or more systems thereof), by the vehicle apparatus 20 in the sensor-based navigation mode, the vehicle apparatus 20 continues to operate in the sensor-based navigation mode, in an example embodiment. As should be understood, block 406, 408, and/or 410 may be performed at least partially in parallel, at least partially overlap in time, and/or at least partially simultaneously.

When, at block 410, it is determined that the vehicle apparatus 20 is located within an area for which the sensors are not able to or are expected to not be able to capture sensor data sufficient for enabling operation of the vehicle apparatus 20 in the sensor-based navigation mode (and a corresponding (valid) map fragment is available in memory 24) the process continues to block 412. For example, when it is determined that a map fragment corresponding to the current location of the vehicle 5 is present (e.g., in memory 24) the vehicle apparatus 20 autonomously operates the vehicle 5 (or one or more systems thereof) in the map-based navigation mode using the map fragment, in an example embodiment. In another example, when it is determined that a map fragment corresponding to the current location of the vehicle 5 is present (e.g., in memory 24) and the sensor data captured by the sensors 29 is not sufficient for enabling autonomous operation of the vehicle 5 (and/or one or more systems thereof), by the vehicle apparatus 20 in the sensor-based navigation mode, the vehicle apparatus 20 autonomously operates in the map-based navigation mode using the map fragment, in an example embodiment.

In various embodiments, when it is determined that a map fragment corresponding to the current location of the vehicle 5 is not present (e.g., in memory 24) and the sensor data captured by the sensors 29 is not sufficient for enabling autonomous operation of the vehicle 5 (and/or one or more systems thereof), by the vehicle apparatus 20 in the sensor-based navigation mode, the vehicle apparatus 20 may request and receive a map fragment corresponding to the area where the vehicle 5 is located and/or may request human operator intervention in the control of the vehicle 5.

At block 412, the vehicle apparatus 20 uses the map data of the map fragment to autonomously navigate through the area corresponding to the map fragment. For example, the vehicle apparatus 20 navigates through the area (e.g., along the route) corresponding to the map fragment in a map-based navigation mode. While operating in the map-based navigation mode, the vehicle apparatus 20 uses map data of the map fragment to provide information about the vehicle's surroundings, the traversable network (e.g., upcoming road way), and/or other information required for autonomous operation of the vehicle 5 and/or one or more systems thereof that is not currently available via the sensor data captured by the sensors 29 coupled to the vehicle 5. In various embodiments, the vehicle apparatus 20 comprises means, such as processor 22, memory 24, sensors 29, and/or the like, for autonomously operating the vehicle 5 and/or one or more systems thereof in a map-based navigation mode.

At block 414, the vehicle apparatus 20 determines whether the vehicle5 has exited the area corresponding to the map fragment. For example, the vehicle apparatus 20 may determine that sensor data captured by the sensors 29 coupled to the vehicle 5 is now sufficient for operating in the sensor-based navigation mode and, based at least in part thereon, determine that the vehicle 5 has exited the area corresponding to the map fragment. In another example, the vehicle apparatus 20 may determine that the vehicle 5 is located at a location that is not in the area corresponding to the map fragment and, based at least in part thereon, determine that the vehicle 5 has exited the area corresponding to the map fragment. In another example, the vehicle apparatus 20 may determine that the map data of the map fragment does not extend any further along the route and, based at least in part thereon, determine that the vehicle 5 has exited the area corresponding to the map fragment.

When it is determined, at block 414, that the vehicle 5 has exited the area corresponding to the map fragment, the process returns to block 406 and/or block 408 and the vehicle apparatus 20 autonomously operates the vehicle (or at least one system thereof) in a sensor-based navigation mode. When it is determined, at block 414, that the vehicle has not exited the area corresponding to the map fragment, the process returns to block 412 and the vehicle apparatus 20 autonomously operates the vehicle 5 (or at least one system thereof) in the map-based navigation mode using the map data of the map fragment. As should be understood, block 406, 412, and/or 414 may be performed at least partially in parallel, at least partially overlap in time, and/or at least partially simultaneously, in various embodiments.

### B. Example Operation of a Network Apparatus to Identify Scenarios/Areas Where Sensor Data is Expected to not be Sufficient

In various embodiments, a network apparatus 10 may analyze sensor data captured and/or provided by one or more vehicle apparatuses 20, map data of a digital map (e.g., a high definition map, a traversable network topology map, and/or the like), weather data, driving condition data, traffic data, and/or the like to identify scenarios in which the it is expected that sensors coupled to a vehicle will not be able to capture sensor data sufficient for operating the vehicle apparatus 20 in a sensor-based navigation mode. The identified scenarios may then be used to identify areas along a route to be traversed by a vehicle 5 and/or being traversed by a vehicle 5 where it is expected that the sensors 29 coupled to the vehicle 5 will not be able to capture sensor data that is sufficient for operating the vehicle apparatus 20 in the sensor-based navigation mode. Respective map fragments corresponding to the identified areas may then be generated and provided to the vehicle apparatus 20 in a timely manner (e.g., so that a respective map fragment is available in the memory 24 when the vehicle 5 enters the respective area and that the map data of the map fragment is still valid when the vehicle 5 is located within the respective area).

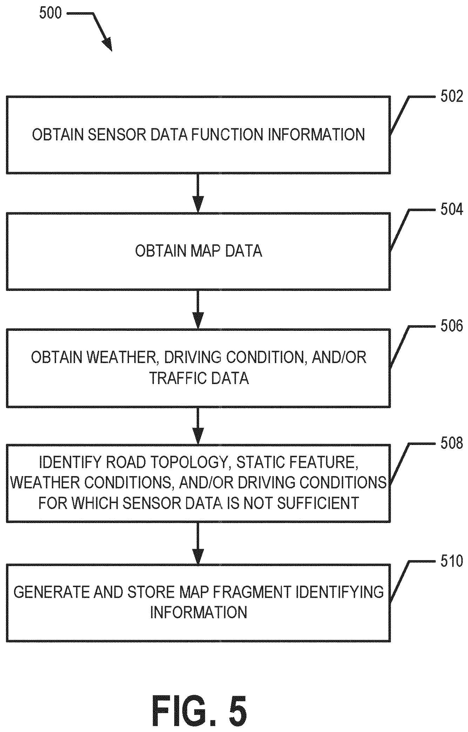

Figure 5 provides a flowchart illustrating a process 500 comprising various processes, procedures, operations, and/or the like used to generate map fragment identifying information according to an example embodiment. In various embodiments, the process 500 is executed periodically and/or regularly (e.g., every ten minutes, every fifteen minutes, every half an hour, and/or the like) and/or continuously to identify areas that are currently areas where the sensor data captured by sensors is not sufficient for operating in a sensor-based navigation mode. For example, the process 500 may be used to identify areas where sensors 29 are not able to capture sensor data that is sufficient for operating in a sensor-based navigation mode in real-time or near real-time. In various embodiments, the process 500 is executed intermittently (e.g., once a week, once a month, once a year, when data corresponding to a new sensor suite is available, and/or the like) to determine criteria that may be used to identify areas that are currently areas where the sensor data captured by sensors is not sufficient for operating in a sensor-based navigation mode. For example, the process 500 may be used to generate criteria that may be used to identify areas where sensors 29 are not able to capture sensor data that is sufficient for operating in a sensor-based navigation mode in real-time or near real-time.

Starting at block 502, the network apparatus 10 obtains sensor data function information generated by one or more vehicle apparatus 20. For example, a vehicle apparatus 20 may generate and provide an instance of sensor data function information responsive to determining that the sensor data captured by the sensors 29 is not sufficient for operating in a sensor-based navigation mode. In an example embodiment, a vehicle apparatus 20 may generate and provide an instance of sensor data function information periodically (e.g., based on a timing trigger). For example, a vehicle apparatus 20 comprises means, such as processor 22, memory 24, communications interface 26, sensors 29, and/or the like, for generating and providing (e.g., transmitting) instances of sensor data function information. A network apparatus 10 comprises means, such as processor 12, memory 14, communications interface 16, and/or the like, for receiving instances of sensor data function information. In an various embodiments, the network apparatus 10 may process the instances of sensor data function information as they are received or may store the instances of sensor data function information to memory 14 for later access and batch processing.

In various embodiments, an instance of sensor data function information may include information used to identify the sensors 29. For example, the instance of sensor function data may include a list of the sensors 29 coupled to the vehicle 5 and possibly respective indications of whether respective sensors 29 are operating properly. For example, the instance of sensor function data may include a sensor suite identifier (e.g., a vehicle make, model, and year; a sensor suite identifier, and/or the like) that may be used to determine which sensors 29 are coupled to the vehicle 5. In various embodiments, the instance of sensor data function information includes a position estimate for the vehicle 5 corresponding to the time when the instance of sensor data function information was generated. In an example embodiment, the instance of sensor data function information may include an indication of whether the sensor data captured by the sensor data captured by the sensors 29 is sufficient for operating in a sensor-based navigation mode (or the instance of sensor data function information may itself be an indication that the sensor data captured by the sensor data captured by the sensors 29 is not sufficient for operating in a sensor-based navigation mode). In an example embodiment, the instance of sensor data function information may include an indication of why the sensor data captured by the sensors is not sufficient for operating in a sensor-based navigation mode (e.g., cannot determine road way details far enough along road way/route, cannot distinguish lane or other road way markings, etc.). In an example embodiment, an instance of sensor data function information includes a timestamp indicating a time when the corresponding sensor data was captured and/or when the instance was generated.

At block 504, the network apparatus 10 obtains and/or accesses map data. For example, the network apparatus 10 may store a digital map in memory 14 and/or be in communication with another computing entity that stores a digital map such that that network apparatus 10 may request and receive map data of the digital map (e.g., via communication interface 16). For example, the network apparatus 10 comprises means, such as processor 12, memory 14, communications interface 16, and/or the like, for obtaining and/or accessing map data. In various embodiments, the map data comprises traversable network topology information describing the geometry of the traversable network, elevations and/or elevation changes along the traversable network, and/or the like. In various embodiments, the map data comprises static feature information describing static features known to exist along the traversable network. For example, the static features may include buildings, lamp posts, signs, statues, parking garages, and/or other structures located along and/or visible from the road way that are expected to be at least semi-permanent and/or expected to not change substantially over an extended period of time (e.g., a month, a year, several years, and/or the like).

At block 506, the network apparatus 10 obtains and/or accesses weather data, driving condition data, and/or traffic data. For example, the network apparatus 10 comprises means, such as processor 12, memory 14, communications interface 16, and/or the like for obtaining and/or accessing weather data, driving condition data, and/or traffic data corresponding to the instances of sensor data function information.

In various embodiments where the network apparatus 10 is analyzing the instances of sensor data function information as they are received, the network apparatus 10 access real-time or near real-time weather data, driving condition data, and/or traffic data. For example, the network apparatus 10 may be configured to determine real-time or near real-time weather data, driving condition data, and/or traffic data or be in communication with another computing entity configured to determine real-time or near real-time weather data, driving condition data, and/or traffic data such that the network apparatus 10 can receive the real-time or near real-time data therefrom. In an example embodiment, the weather data, driving conditions data, and/or traffic data is obtained, received, and/or accessed as part of the digital map (e.g., the digital map may be a high definition digital map).

In various embodiments where the network apparatus 10 batch processes the instances of sensor data function information (e.g., such that the instances are not analyzed in real-time or near real-time) the network apparatus 10 accesses respective historical weather data, driving condition data, and/or traffic data based on the respective locations and/or timestamps of the instances of sensor data function information. For example, the network apparatus 10 may store one or more databases of historical weather data, driving condition data, and/or traffic data and/or be in communication with another computing entity that stores one or more databases of historical weather data, driving condition data, and/or traffic data such that the network apparatus 10 can receive the historical weather data, driving condition data, and/or traffic data.

At block 508, the network apparatus 10 analyzes the respective map data, weather data, driving condition data, and/or traffic data corresponding to the respective locations and/or times of the respective instances of sensor data function information to identify road topology scenarios, static feature scenarios, weather condition scenarios, and/or driving condition scenarios, and/or combinations thereof that tend to result in sensors 29 of respective sensor suites not being able to capture sensor data that is sufficient for operating in a sensor-based navigation mode. For example, the network apparatus 10 comprises means, such as processor 12, memory 14, and/or the like for analyzing the respective map data, weather data, driving condition data, and/or traffic data corresponding to the respective locations and/or times of the respective instances of sensor data function information to identify road topology scenarios, static feature scenarios, weather dentition scenarios, and/or driving condition scenarios, and/or combinations thereof that tend to result in sensors 29 of respective sensor suites not being able to capture sensor data that is sufficient for operating in a sensor-based navigation mode.

For example, in an example embodiment, the instances of sensor data function information are grouped and/or clustered based on sensor suite and/or substantially similar sensor suites and scenarios that are expected to result in sensors 29 of respective sensor suites not being able to capture sensor data that is sufficient for operating in a sensor-based navigation mode may be identified.

In an example embodiment, the instances of sensor data function information are grouped and/or clustered based on similar weather conditions, driving conditions, and/or traffic conditions and various weather, driving condition, and/or traffic scenarios that are expected to result in sensors 29 of respective sensor suites not being able to capture sensor data that is sufficient for operating in a sensor-based navigation mode may be identified. For example, the respective instances of sensor data function information may be assigned to respective groups based on whether the respective weather data indicates no precipitation and good visibility, no precipitation and poor visibility, light rain, medium rain, heavy rain, light snow, medium, snow, heavy snow, and/or the like. For the instances of sensor data function information assigned to the no precipitation and good visibility group, the instances of sensor data function information may be further analyzed to determine whether road topology, static features, driving conditions, traffic conditions and/or a combination thereof are the cause of the sensors 29 not being able to capture sensor data sufficient for operating in the sensor-based navigation mode.

In an example embodiment, the instances of sensor data function information may be grouped and/or clustered by location for identifying particular areas where the sensors 29 not being able to capture sensor data sufficient for operating in the sensor-based navigation mode may be identified. In an example embodiment, the instances of sensor data function information are grouped and/or clustered by location and orientation/heading/direction of travel location for identifying particular areas and/or particular approaches to particular areas where the sensors 29 not being able to capture sensor data sufficient for operating in the sensor-based navigation mode may be identified.

In an example embodiment, a statistical analysis is used to analyze respective/individual instances of sensor data function information or groups/clusters of instances of sensor data function information to identify scenarios in which it is expected that the sensors 29 will not be able to capture sensor data that is sufficient for operating in the sensor-based navigation mode. In an example embodiment, a machine learning trained model (e.g., a deep neural network, long short term memory (LSTM) recurrent neural network (RNN), classifier, and/or the like) is used to analyze the instances of sensor data function information (collectively, individually, and/or as groups/clusters) to identify scenarios in which it is expected that the sensors 29 will not be able to capture sensor data that is sufficient for operating in the sensor-based navigation mode. For example, in various embodiments, identifying scenarios in which it is expected that the sensors 29 will not be able to capture sensor data that is sufficient for operating in the sensor-based navigation mode, comprises uses machine learning to train a model configured to operate as a map fragment identifying engine. For example, in an example embodiment, a map fragment identifying engine is trained to receive a route and current and/or predicted weather/driving/traffic conditions for the route and to provide as output one or more areas along the route where it is expected that the sensors 29 will not be able to capture sensor data that is sufficient for operating in the sensor-based navigation mode.

For example, the scenarios in which it is expected that the sensors 29 will not be able to capture sensor data that is sufficient for operating in the sensor-based navigation mode may be identified by particular criteria, in an example embodiment. For example, a road topology criteria may indicate that if, according to the corresponding map data, the change in elevation of a TME is greater than a particular elevation change (e.g., elevation drop) it is expected that the sensors 29 will not be able to capture sensor data sufficient for operating in a sensor-based navigation mode as a corresponding vehicle 5 traverses the corresponding hill. In another example, a road topology criteria may indicate that if, according to the corresponding map data, a curve in the TME or a turn to be made at an intersection is greater than a first angle or less than a second angle, it is expected that the sensors 29 will not be able to capture sensor data sufficient for operating in a sensor-based navigation mode as a corresponding vehicle 5 traverses the corresponding curve or turn. Similarly, various combinations of road way topology and static feature dimensions and placement may be determined to result in the sensors 29 will not be able to capture sensor data sufficient for operating in a sensor-based navigation mode in the vicinity of the static feature. For example, criteria may be defined that when the visibility reaches a particular level or when the snow fall rate exceeds a particular rate or when the snow accumulation within a particular preceding time period is at least a particular minimum snow accumulation, it is expected that the sensors 29 will not be able to capture sensor data sufficient for operating in a sensor-based navigation mode in the area affected by the low visibility and/or snow fall. Various other criteria may be determined and/or defined based on the analysis of the map data, weather data, driving condition data, and/or traffic data corresponding to the instances of sensor data function information.

At block 510, the network apparatus 10 generates and stores map fragment identifying information. For example, the network apparatus 10 comprises means, such as processor 12, memory 14, and/or the like, for generating and storing map fragment identifying information. In an example embodiment, the map fragment identifying information includes an indication of one or more sensor suites for which the map fragment identifying information is expected to pertain. In various embodiments, the map fragment identifying information is generated and then stored in memory 14.

In an example embodiment wherein the instances of sensor data function information are processed in real-time or near real-time with respect to the network apparatus 10 receiving the instances of sensor data function information, the map fragment identifying information may define an area (e.g., geographical coordinates defining a bounding box/polygon, an area center point and a radius about the area center point, and/or the like) within which it is expected that sensors 29 are not currently able to capture sensor data that is sufficient for operation in a sensor-based navigation mode. In such an embodiment, the map fragment identifying information may also indicate a period of time for which the map fragment identifying information is expected to be accurate. For example, if the map fragment identifying information was generated based on a road topology criteria and/or static feature criteria, it is expected that the respective area will continue to be an area where the sensors 29 are not able to capture sensor data that is sufficient for operation in a sensor-based navigation mode (as the road topology and/or static feature area unlikely to change in the near future). Thus, the corresponding map fragment identifying information generated based on the road topology and/or static feature criteria may indicate that the period of time for which the map fragment identifying information is expected to be accurate is significantly longer than when map fragment identifying information is generated based on weather criteria. In an example embodiment, when map fragment identifying information is generated based on weather criteria, the indicated time period may be determined based at least in part on a weather forecast.

In an example embodiment, where the instances of sensor data function information are batch processed, the map fragment identifying information comprises determined criteria that may be used to determine whether a particular situation (e.g., a particular section of road way topology, a particular weather situation, etc.) corresponds to an expectation that the sensors 29 will not be able to capture sufficient sensor data for operating in a sensor-based navigation mode. For example, the map fragment identifying information comprises one or more criteria that may be compared to map data and/or real-time or near real-time weather, driving condition, or traffic data to identify areas where it is expected (in real-time or near real-time) that sensors 29 (of one or more particular sensor suites) will not be able to capture sensor data sufficient for operation in a sensor-based navigation mode.

In an example embodiment, the process 500 is split into two processes where a first process in which one or more batches of instances of sensor data function information are analyzed based on map data is performed intermittently to identify areas in which it is expected that the sensors 29 will not be able to capture sensor data that is sufficient for operation in a sensor-based navigation mode based on road topology and/or static features. As these areas are expected to continue to be areas in which it is expected that the sensors 29 will not be able to capture sensor data that is sufficient for operation in a sensor-based navigation mode for an extended period of time (e.g., due to the substantially static nature of the road topology and static features), these areas may be identified not in real-time and be used to provide map fragments to vehicle devices in real time. A second process may analyze instances of sensor data function information in real-time or near real-time based on real-time or near real-time weather data, driving condition data, and/or traffic data to determine areas within which it is expected that the sensors 29 will not be able to capture sensor data that is sufficient for operation in a sensor-based navigation mode based on current and/or expected weather, driving, and/or traffic conditions. This second process may be performed periodically and/or continuously as the areas identified based on weather, driving, and/or traffic conditions may change in time scales of less than an hour (e.g., time scales that may be comparable to and/or less than the time it takes a vehicle 5 to traverse an average route).

In an example embodiment, the map fragment identifying information comprises weights and/or parameter values for a machine learning trained map fragment identifying engine.

### C. Example Operation of a Network Apparatus and/or Vehicle Apparatus for a Vehicle Apparatus to Obtain a Map Fragment

In various embodiments, one or more map fragments corresponding to respective areas are obtained by a vehicle apparatus 20. The vehicle apparatus 20 uses the one or more map fragments to autonomously operate a vehicle 5 to traverse respective areas along a route where sensors 29 coupled to the vehicle 5 are expected to not be able to capture sensor data sufficient for the vehicle apparatus 20 operate in a sensor-based navigation mode. For example, based on a route the vehicle apparatus 20 is expected to traverse and/or a location of the vehicle apparatus, one or more areas along the route and/or near the location of the vehicle apparatus where it is expected that the one or more sensors 29 will not be able to capture sensor data sufficient for operation of the vehicle apparatus in the sensor-based navigation mode are determined. Responsive to determining that a trigger corresponding to a respective area of the one or more areas has been identified, the vehicle apparatus obtains a map fragment corresponding to the respective area. The map fragment is configured to be used by the vehicle apparatus to autonomously operate the vehicle to traverse the respective area using a map-based navigation mode.

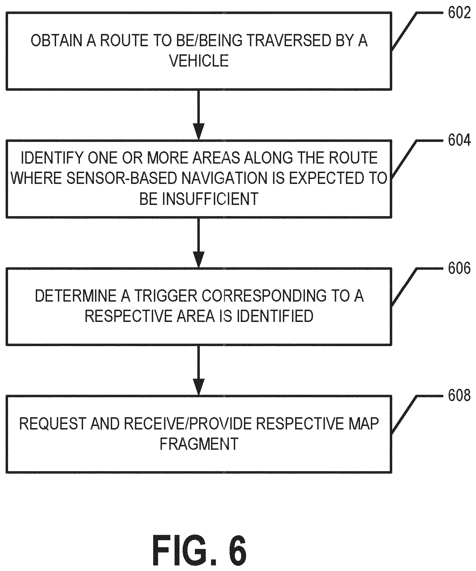

Figure 6 provides a flowchart illustrating various processes, procedures, operations, and/or the like for a vehicle to obtain a map fragment. In various embodiments, the processes, procedures, operations, and/or the like shown in Figure 6 are performed by the network apparatus 10 and/or the vehicle apparatus 20.

Starting at block 602, a route to be and/or currently being traversed by a vehicle 5 is obtained. For example, a network apparatus 10 may receive a route request generated and provided (e.g., transmitted) by a vehicle apparatus 20 configured to autonomously operate at least one system of the vehicle 5. In various embodiments, the route request may indicate a current location of the vehicle apparatus 20 or another origin location for the route and a destination location for the route. In various embodiments, the route request may further provide user preferences (e.g., avoiding toll roads, avoiding highways, etc.), an indication of the sensors 29 coupled to the vehicle 5, an indication that the vehicle apparatus 20 is configured to autonomously operate the vehicle 5 and/or one or more systems thereof in a sensor-based navigation mode and/or a map-based navigation mode, and/or the like. The network apparatus 10 may generate a route based on the route request. For example, the network apparatus 10 may store (e.g., in memory 14) and/or have access to (e.g., via communications interface 16) a digital map (e.g., a high definition map) and may use the map data of the digital map and information provided by the route request to generate a route. The network apparatus 10 may the provide (e.g., transmit) a communication encoding the route such that the vehicle apparatus 20 receives the communication and determines the route based thereon.

For example, a network apparatus 20 comprises means, such as processor 22, memory 24, communications interface 26, and/or the like, for obtaining a route to be/being traversed by a corresponding vehicle 5 by generating and providing a route request, receiving a communication encoding the route, and determining the route based on the communication. For example, a network apparatus 10 comprises means, such as processor 12, memory 14, communications interface 16, and/or the like, for obtaining a route to be/being traversed by a vehicle 5 by receiving a route request and generating a route based information provided by the route request and map data of a digital map. In an example embodiment, the vehicle apparatus stores a basic map (e.g., in memory 24; a map that describes the topology of at least a portion of a traversable network but that does not provide sufficient map data for operating a vehicle in a map-based navigation mode) and determines the route (e.g., by executing, with processor 12, route determining instructions stored in memory 14).

At block 604, the network apparatus 10 or the vehicle apparatus 20 determines one or more areas along the route where it is expected that sensors 29 coupled to the vehicle 5 (e.g., the sensors 29 indicated in the route request) will not be able to capture sensor data that is sufficient for the vehicle apparatus 20 to be able to autonomously operate the vehicle 5 and/or one or more systems thereof in a sensor-based navigation mode. For example, the network apparatus 10 and/or the vehicle apparatus 20 comprise means, such as processor 12, 22, memory 14, 24, and/or the like, for determining one or more areas along the route where it is expected that sensors 29 coupled to the vehicle 5 (e.g., the sensors 29 indicated in the route request) will not be able to capture sensor data that is sufficient for the vehicle apparatus 20 to be able to autonomously operate the vehicle 5 and/or one or more systems thereof in a sensor-based navigation mode.

In various embodiments, the one or more areas along the route where it is expected that sensors 29 coupled to the vehicle 5 (e.g., the sensors 29 indicated in the route request) will not be able to capture sensor data that is sufficient for the vehicle apparatus 20 to be able to autonomously operate the vehicle 5 and/or one or more systems thereof in a sensor-based navigation mode are determined based on one or more of map data (e.g., of a digital map such as a high definition map); real-time, near real-time, and/or predicted weather data; real-time, near real-time, and/or predicted driving condition data; real-time, near real-time, and/or predicted traffic data; map fragment identifying information (e.g., stored by memory 14); and/or the like. For example, in an example embodiment, the map fragment identifying information is used to identify one or more areas along the route where it is expected that sensors 29 coupled to the vehicle 5 (e.g., the sensors 29 indicated in the route request) will not be able to capture sensor data that is sufficient for the vehicle apparatus 20 to be able to autonomously operate the vehicle 5 and/or one or more systems thereof in a sensor-based navigation mode. In an example embodiment, the map fragment identifying information is used to analyze at least one of map data (e.g., of a digital map such as a high definition map); real-time, near real-time, and/or predicted weather data; real-time, near real-time, and/or predicted driving condition data; real-time, near real-time, and/or predicted traffic data; map fragment identifying information (e.g., stored by memory 14) to determine one or more areas along the route where it is expected that sensors 29 coupled to the vehicle 5 (e.g., the sensors 29 indicated in the route request) will not be able to capture sensor data that is sufficient for the vehicle apparatus 20 to be able to autonomously operate the vehicle 5 and/or one or more systems thereof in a sensor-based navigation mode.

For example, the weather, driving, and/or traffic conditions expected for a portion of the route while the vehicle 5 is expected to be traversing the portion of the route are compared to and/or analyzed or processed in light of the map fragment identifying information to determine whether the portion of the route is an area where it is expected that sensors 29 coupled to the vehicle 5 (e.g., the sensors 29 indicated in the route request) will not be able to capture sensor data that is sufficient for the vehicle apparatus 20 to be able to autonomously operate the vehicle 5 and/or one or more systems thereof in a sensor-based navigation mode. In an example embodiment, the analyzing or processing the weather, driving, and/or traffic conditions expected for a portion of the route while the vehicle 5 is expected to be traversing the portion of the route comprises comparing one or more values to corresponding thresholds to determine whether respective criteria are satisfied. In an example embodiment, the map fragment identifying information and the current and/or predicted weather, driving, and/or traffic conditions are used by a map fragment identifying engine, which is a machine learning trained model trained and/or configured to determine which portions of a route area areas where it is expected that sensors 29 coupled to the vehicle 5 (e.g., the sensors 29 indicated in the route request) will not be able to capture sensor data that is sufficient for the vehicle apparatus 20 to be able to autonomously operate the vehicle 5 and/or one or more systems thereof in a sensor-based navigation mode, to determine the one or more areas.

In various embodiments, each of the determined one or more areas is associated with a trigger. In an example embodiment, the trigger for a respective area corresponds to the vehicle 5 being within a particular distance of the respective area and/or the vehicle 5 being expected to be located within the respective area within a particular period of time (e.g., based on the distance along the route until the vehicle 5 reaches the respective area and the vehicle's 5 current and/or expected speed while traversing that distance). In various embodiments, the trigger associated with a respective area is determined and/or set based at least in part on the amount of time that map data of the high definition map and corresponding to the respective area is expected to be valid, accurate, and/or up-to-date. For example, the trigger is configured such that the vehicle 5 obtains the map fragment such that when the vehicle 5 traverses the respective area corresponding to the map fragment, the map data of the map fragment is expected to be valid, accurate, and/or up-to-date. In an example embodiment, the trigger for a respective area is determined based at least in part on the expected reception (e.g., the vehicle apparatus's 20 ability to receive communications via communication interface 26) along the route while approaching the area. For example, if reception is known to be poor along a portion of the route immediately preceding the respective area, the trigger for the respective area may correspond to the vehicle 5 being located at position along the route prior to where the reception becomes poor immediately preceding the respective area.

In various embodiments, the network apparatus 10 determines the one or more areas along the route and determines and/or sets the corresponding triggers. The network apparatus 10 may provide (e.g., transmit) information corresponding to a respective trigger of at least one of the one or more areas such that the vehicle apparatus 20 receives the information corresponding to the respective trigger. For example, the information corresponding to the respective trigger may be provided in association with the route or in a separate communication.

At block 606, the network apparatus 10 and/or the vehicle apparatus 20 determine that a trigger corresponding to a respective area has been identified. For example, the network apparatus 10 and/or vehicle apparatus 20 comprises means, such as processor 12, 22, memory 14, 24, communications interface 16, 26, sensors 29, and/or the like, for determining that a trigger corresponding to the respective area has been identified. For example, the network apparatus 10 and/or the vehicle apparatus 20 may monitor the location of the vehicle 5 and determine that the vehicle 5 is located within the particular distance of the respective area and/or the vehicle 5 is expected to be located within the respective area within the particular period of time.

At block 608, responsive to determining that the trigger corresponding to a respective area has been identified, the respective map fragment is obtained by the vehicle apparatus 20. For example, the vehicle apparatus 20 may determine that the trigger corresponding to the respective area has been identified and generate and provide (e.g., transmit) a map fragment request that identifies the respective area. The network apparatus 10 may receive the map fragment request, determine the respective area based on the information provided by the map fragment request, generate the respective map fragment by extracting map data corresponding to the respective area from the high definition map stored by and/or accessible to the network apparatus, and provide (e.g., transmit) the respective map fragment such that the vehicle apparatus 20 receives the respective map fragment. The vehicle apparatus 20 may receive the respective map fragment and hold the map fragment available (e.g., in memory 24) for use while traversing the respective area. In an example embodiment, the map fragment request is provided as an API call and the map fragment is received via an API response.

In another example, the network apparatus 10 determines that the trigger corresponding to a respective area has been identified. For example, the vehicle apparatus 20 may periodically provide information indicating the location, speed, heading, and/or the like of the vehicle 5 such that the network apparatus 10 is enabled to track the location and/or progress of the vehicle 5 along the route. Based thereon, the network apparatus 10 determines that the trigger corresponding to the respective area has been identified and, responsive thereto, generates the respective map fragment by extracting map data corresponding to the respective area from the high definition map stored by and/or accessible to the network apparatus, and provides (e.g., transmit) the respective map fragment such that the vehicle apparatus 20 receives the respective map fragment. The vehicle apparatus 20 may receive the respective map fragment and hold the map fragment available (e.g., in memory 24) for use while traversing the respective area. In an example embodiment, the network apparatus 10 provides the map fragment via a push method, an API call, and/or the like.

In various embodiments, the network apparatus 10 comprises means, such as processor 12, memory 14, communications interface 16, and/or the like, for determining that the trigger corresponding to a respective area has been identified, receiving a map fragment request, generating a map fragment, and/or providing a map fragment. In various embodiments, the vehicle apparatus 20 comprises means, such as processor 22, memory 24, communications interface 26, and/or the like, for determining that the trigger corresponding to a respective area has been identified, generating and providing a map fragment request, and/or receiving a map fragment.

### IV. Technical Advantages

Autonomous operation of a vehicle requires that the vehicle apparatus autonomously operating the vehicle (and/or one or more systems thereof) have sufficient information about the upcoming road way and/or the environment around the vehicle. In various scenarios, sensors coupled to the vehicle are able to capture sensor data that is sufficient to provide the vehicle apparatus with the required information about the upcoming road way and/or environment around the vehicle. However, in various scenarios the sensors coupled to the vehicle are not able to capture sensor data that is sufficient to provide the vehicle apparatus with the required information about the upcoming road way and/or environment around the vehicle. The conventional solution to this problem is for the vehicle apparatus to store a high definition map that includes information that may be used to augment the sensor data such that the vehicle apparatus can autonomously operate the vehicle (and/or one or more systems thereof) through areas where the sensors coupled to the vehicle are not able to capture sensor data that is sufficient to provide the vehicle apparatus with the required information about the upcoming road way and/or environment around the vehicle.

However, the high definition map is very detailed, as is necessary to provide the vehicle apparatus with sufficient information about the upcoming road way and/or environment around the vehicle. Moreover, the high definition map comprises information that may and/or is expected to change on a relatively short time scale. For example, information in the high definition map may change substantially while the vehicle is traversing a route. Therefore, maintaining a valid, accurate, and/or up-to-date high definition map at the vehicle apparatus requires significant bandwidth usage. As should be understood, the communication channels available for providing information to the vehicle apparatus while the vehicle traverses a route are bandwidth limited. Moreover, the amount of memory required to store the high definition map at the vehicle apparatus is quite large. Therefore, technical problems exist as to how to enable a vehicle apparatus to autonomously operate a vehicle (and/or one or more systems thereof) when the vehicle is traversing an area where the sensors coupled to the vehicle are not able to capture sensor data that is sufficient for autonomously operating the vehicle in a sensor-based navigation mode (where the vehicle apparatus 20 is determining the necessary information about the upcoming road way and/or environment around the vehicle based on the sensor data).

Various embodiments provide technical solutions to these technical problems. For example, various embodiments provide for areas where it is expected that sensors coupled to a vehicle will not be able to capture sensor data that is sufficient for autonomously operating the vehicle in a sensor-based navigation mode. When a vehicle is expected to traverse such an area, a map fragment is provided to the corresponding vehicle apparatus so that the vehicle apparatus can use the map data of the map fragment to autonomously operate the vehicle in a map-based navigation mode while traversing the area. While the vehicle apparatus may need multiple map fragments to traverse a route, the map fragments are non-connected, non-contiguous portions of the high definition map. In other words, a respective map fragment is minimized to only include map data corresponding to a respective area where it is expected that the sensors will not be able to capture sensor data that is sufficient for autonomously operating the vehicle in a sensor-based mode such that map data provided to the vehicle apparatus is minimized and/or substantially reduced compared to conventional techniques. For example, in an example embodiment, the vehicle apparatus is only provided with the map data of the high definition map required for the vehicle apparatus to traverse the areas along the vehicle's route where it is expected that the sensors will not be able to capture sensor data that is sufficient for autonomously operating the vehicle in a sensor-based mode. Thus, the amount of bandwidth used to provide the high definition map (and/or portions thereof) to the vehicle apparatus is significantly reduced and the amount of memory the vehicle apparatus uses for storing the high definition map (and/or portions thereof) is significantly reduced while still enabling the vehicle apparatus to autonomously operate the vehicle (and/or one or more systems thereof) in areas where the sensors coupled to the vehicle are not able to capture sensor data that is sufficient for autonomous operation in a sensor-based navigation mode.

Various embodiments therefore provide technical solutions to the technical problems of the bandwidth efficient communication of map data required to enable autonomous vehicle operation.

### V. Example Apparatus

The network apparatus 10 and/or vehicle apparatus 20 of an example embodiment may be embodied by or associated with a variety of computing devices including, for example, a navigation system including an in-vehicle navigation system, a vehicle control system, a personal navigation device (PND) or a portable navigation device, an advanced driver assistance system (ADAS), a global navigation satellite system (GNSS), a cellular telephone, a mobile phone, a personal digital assistant (PDA), a watch, a camera, a computer, and/or other device that can perform navigation-related functions, such as digital routing and map display. Additionally or alternatively, the network apparatus 10 and/or vehicle apparatus 20 may be embodied in other types of computing devices, such as a server, a personal computer, a computer workstation, a laptop computer, a plurality of networked computing devices or the like, that are configured to update one or more map tiles of a high definition map, determine areas along a route where it is expected that sensors coupled to a vehicle will not be able to capture sensor data sufficient for autonomously operating the vehicle in a sensor-based navigation mode, generating and providing map fragments of a high definition map, receiving map fragments, autonomously operating a vehicle and/or one or more systems thereof in a sensor-based navigation mode or a map-based navigation mode based on the availability of a map fragment and/or the available sensor data, and/or the like. In an example embodiment, a vehicle apparatus 20 is an in-vehicle navigation system and/or vehicle controls system coupled to and/or onboard a vehicle 5 and a network apparatus 10 is a server and/or part of a Cloud-based service. In an example embodiment, a vehicle apparatus 20 is an apparatus configured to control a vehicle 5 to traverse a route.

In some embodiments, the processor 12, 22 (and/or co-processors or any other processing circuitry assisting or otherwise associated with the processor) may be in communication with the memory device 14, 24 via a bus for passing information among components of the apparatus. The memory device may be non-transitory and may include, for example, one or more volatile and/or non-volatile memories. In other words, for example, the memory device may be an electronic storage device (e.g., a non-transitory computer readable storage medium) comprising gates configured to store data (e.g., bits) that may be retrievable by a machine (e.g., a computing device like the processor). The memory device may be configured to store information, data, content, applications, instructions, or the like for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

As described above, the network apparatus 10 and/or vehicle apparatus 20 may be embodied by a computing device. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 12, 22 may be embodied in a number of different ways. For example, the processor 12, 22 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor 12, 22 may include one or more processing cores configured to perform independently. A multi-core processor may enable multiprocessing within a single physical package. Additionally or alternatively, the processor 12, 22 may include one or more processors configured in tandem via the bus to enable independent execution of instructions, pipelining and/or multithreading.

In an example embodiment, the processor 12, 22 may be configured to execute instructions stored in the memory device 14, 24 or otherwise accessible to the processor. Alternatively or additionally, the processor may be configured to execute hard coded functionality. As such, whether configured by hardware or software methods, or by a combination thereof, the processor may represent an entity (e.g., physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device (e.g., a pass-through display or a mobile terminal) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

In some embodiments, the network apparatus 10 and/or vehicle apparatus 20 may include a user interface 18, 28 that may, in turn, be in communication with the processor 12, 22 to provide output to the user, such as one or more notifications regarding traffic conditions along at least a portion of a route, time to traverse a route, and/or the output of one or more other navigation functions, and, in some embodiments, to receive an indication of a user input. As such, the user interface may include one or more output devices such as a display, speaker, and/or the like and, in some embodiments, may also include one or more input devices such as a keyboard, a mouse, a joystick, a touch screen, touch areas, soft keys, a microphone, a speaker, or other input/output mechanisms. Alternatively or additionally, the processor may comprise user interface circuitry configured to control at least some functions of one or more user interface elements such as a display and, in some embodiments, a speaker, ringer, microphone and/or the like. The processor and/or user interface circuitry comprising the processor may be configured to control one or more functions of one or more user interface elements through computer program instructions (e.g., software and/or firmware) stored on a memory accessible to the processor 12, 22 (e.g., memory device 14, 24 and/or the like).

The network apparatus 10 and/or vehicle apparatus 20 may optionally include a communication interface 16, 26. The communication interface 16, 26 may be any means such as a device or circuitry embodied in either hardware or a combination of hardware and software that is configured to receive and/or transmit data from/to a network and/or any other device or module in communication with the apparatus. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

In addition to embodying the network apparatus 10 and/or vehicle apparatus 20 of an example embodiment, a navigation system may also include or have access to a geographic database. For example, as described above, the network apparatus 10 may store and/or have access to a high definition map which may be stored as a geographic database. The vehicle apparatus 20 may store and/or have access to a basic map and one or more map fragments of a high definition map. For example, in various embodiments, a network apparatus 10 and/or vehicle apparatus 20 may comprise a component (e.g., memory 14, 24, and/or another component) that stores a digital map (e.g., in the form of a geographic database) comprising a first plurality of data records, each of the first plurality of data records representing a corresponding TME, wherein at least some of said first plurality of data records map information/data (e.g., the updated map information/data) indicating current traffic conditions along the corresponding TME. For example, the geographic database may include a variety of data (e.g., map information/data) utilized in various navigation functions such as constructing a route or navigation path, determining the time to traverse the route or navigation path, matching a geolocation (e.g., a GNSS determined location) to a point on a map, a lane of a lane network, and/or link, one or more localization features and a corresponding location of each localization feature, and/or the like. For example, a geographic database may include road segment, segment, link, lane segment, or traversable map element (TME) data records, point of interest (POI) data records, localization feature data records, and other data records. More, fewer or different data records can be provided. In one embodiment, the other data records include cartographic ("carto") data records, routing data, and maneuver data. One or more portions, components, areas, layers, features, text, and/or symbols of the POI or event data can be stored in, linked to, and/or associated with one or more of these data records. For example, one or more portions of the POI, event data, or recorded route information can be matched with respective map or geographic records via position or GNSS data associations (such as using known or future map matching or geo-coding techniques), for example. In an example embodiment, the data records may comprise nodes, connection information/data, intersection data records, link data records, POI data records, and/or other data records. In an example embodiment, the network apparatus 10 may be configured to modify, update, and/or the like one or more data records of the geographic database. For example, the network apparatus 10 may modify, update, generate, and/or the like map information/data corresponding to TMEs, links, lanes, road segments, travel lanes of road segments, nodes, intersection, and/or the like and/or the corresponding data records (e.g., to add or update updated map information/data including, for example, current traffic conditions along a corresponding TME), a localization layer (e.g., comprising localization features) and/or the corresponding data records, and/or the like.

In an example embodiment, the TME data records are links, lanes, or segments (e.g., maneuvers of a maneuver graph, representing roads, travel lanes of roads, streets, or paths, as can be used in the calculated route or recorded route information for determination of one or more personalized routes). The intersection data records are ending points corresponding to the respective links, lanes, or segments of the TME data records. The TME data records and the intersection data records represent a traversable network, such as used by vehicles, cars, bicycles, and/or other entities. Alternatively, the geographic database can contain path segment and intersection data records or nodes and connection information/data or other data that represent pedestrian paths or areas in addition to or instead of the vehicle road record data, for example.

The TMEs, lane/road/link segments, segments, intersections, and/or nodes can be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database can include data about the POIs and their respective locations in the POI data records. The geographic database can also include data about places, such as cities, towns, or other communities, and other geographic features, such as bodies of water, mountain ranges, etc. Such place or feature data can be part of the POI data or can be associated with POIs or POI data records (such as a data point used for displaying or representing a position of a city). In addition, the geographic database can include and/or be associated with event data (e.g., traffic incidents, constructions, scheduled events, unscheduled events, etc.) associated with the POI data records or other records of the geographic database.

The geographic database can be maintained by the content provider (e.g., a map developer) in association with the services platform. By way of example, the map developer can collect geographic data to generate and enhance the geographic database. There can be different ways used by the map developer to collect data. These ways can include obtaining data from other sources, such as municipalities or respective geographic authorities. In addition, the map developer can employ field personnel to travel by vehicle along roads throughout the geographic region to observe features and/or record information about them, for example. Also, remote sensing, such as aerial or satellite photography, can be used.

The geographic database can be a master geographic database stored in a format that facilitates updating, maintenance, and development. For example, the master geographic database or data in the master geographic database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF) format) to organize and/or configure the data for performing navigation-related functions and/or services, such as route calculation, route guidance, map display, speed calculation, distance and travel time functions, and other functions. The navigation-related functions can correspond to vehicle navigation or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases. Regardless of the manner in which the databases are compiled and maintained, a navigation system that embodies a network apparatus 10 and/or vehicle apparatus 20 in accordance with an example embodiment may determine the time to traverse a route that includes one or more turns at respective intersections more accurately.

### VI. Apparatus, Methods, and Computer Program Products

As described above, Figures 4, 5, and 6 illustrate flowcharts of a network apparatus 10 and/or vehicle apparatus 20, methods, and computer program products according to an example embodiment of the invention. It will be understood that each block of the flowcharts, and combinations of blocks in the flowcharts, may be implemented by various means, such as hardware, firmware, processor, circuitry, and/or other devices associated with execution of software including one or more computer program instructions. For example, one or more of the procedures described above may be embodied by computer program instructions. In this regard, the computer program instructions which embody the procedures described above may be stored by the memory device 14, 24 of an apparatus employing an embodiment of the present invention and executed by the processor 12, 22 of the apparatus. As will be appreciated, any such computer program instructions may be loaded onto a computer or other programmable apparatus (e.g., hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

In some embodiments, certain ones of the operations above may be modified or further amplified. Furthermore, in some embodiments, additional optional operations may be included. Modifications, additions, or amplifications to the operations above may be performed in any order and in any combination.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included insofar as they are within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method comprising:
based on either a route (330) a vehicle apparatus (20) coupled to a vehicle (5) is expected to traverse or a location of the vehicle apparatus, determining, by one or more processors, one or more areas (310A, 310B) either along the route or near the location of the vehicle apparatus, where it is expected that one or more sensors (29) coupled to the vehicle will not be able to capture sensor data sufficient for autonomous operation of the vehicle in a sensor-based navigation mode because of at least one of: a topology of the traversable network in the one or more areas, one or more static features located in the one or more areas, and current or expected driving conditions in the one or more areas, wherein the driving conditions are construction events, traffic events that block the view of various sensors, pop-up sidewalk shops, and/or other temporary situations that are not directly related to the weather; associating each of the determined one or more areas with a trigger and
responsive to determining that a trigger corresponding to a respective area of the one or more areas has been identified, causing, by the one or more processors, the vehicle apparatus to obtain a map fragment corresponding to the respective area, wherein the map fragment is configured to be used by the vehicle apparatus to autonomously operate the vehicle to traverse the respective area using a map-based navigation mode.

2. The method of claim 1, wherein the map fragment is a portion of a high definition map that corresponds to the respective area.

3. The method of claim 1, wherein the vehicle apparatus is caused to obtain two or more map fragments, each of the two or more map fragments corresponding to a respective area, and the two or more map fragments are not connected to one another via traversable network topology map data of the two or more map fragments.

4. The method of claim 1, wherein the one or more areas are determined responsive to a route request, wherein the route is determined in response to the route request.

5. The method of claim 1, wherein the determining that a trigger corresponding to a respective area of the one or more areas has been identified is based at least in part on at least one of a location of the vehicle apparatus or a predicted location of the vehicle apparatus.

6. The method of claim 1, wherein at least one area of the one or more areas is determined as an area where it is expected that the one or more sensors will not be able to capture sensor data sufficient for operation of the apparatus in the sensor-based navigation mode based at least in part on sensor data captured by one or more sensors within the at least one area.

7. A non-transitory computer-readable storage medium having computer-readable program code portions stored therein, the computer-readable program code portions comprising executable portions configured to, when executed by a processor of an apparatus (10), cause the apparatus to perform the method of any of the preceding method claims.

8. A network apparatus (10) comprising at least one processor (12) and at least one memory (14), the at least one memory storing computer program code, the at least one memory and the computer program code configured to, with the at least one processor, cause the apparatus to perform the method of any of the preceding claims.

9. A vehicle apparatus (20) comprising at least one processor (22) and at least one memory (24), the at least one processor in communication with one or more sensors (29) coupled to a vehicle (5), the at least one memory storing computer program code, the at least one memory and the computer program code configured to, with the processor, cause the apparatus to at least:
autonomously operate at least one system of the vehicle as the vehicle navigates along a route (330) through at least a portion of a traversable network in a sensor-based navigation mode;
obtain a map fragment corresponding to an area (310A, 310B) along the route, where it is expected that the one or more sensors will not be able to capture sensor data sufficient for autonomous operation of the at least one system of the vehicle in the area while in the sensor-based navigation mode because of at least one of: a topology of the traversable network in the area, one or more static features located in the area, and current or expected driving conditions in the area, wherein the driving conditions are construction events, traffic events that block the view of various sensors, pop-up sidewalk shops, and/ or other temporary situations that are not directly related to the weather;
responsive to determining that the vehicle is located within the area, autonomously operate the at least one system of the vehicle as the vehicle navigates a portion of the route within the area in a map-based navigation mode using map data of the map fragment; and
responsive to determining that the vehicle has exited the area, autonomously operate the at least one system of the vehicle as the vehicle continues to navigate along the route in the sensor-based navigation mode.

10. The vehicle apparatus of claim 9, wherein two or more map fragments are stored by the at least one memory, each of the two or more map fragments corresponding to a respective area, and the two or more map fragments are not connected to one another via traversable network topology map data of the two or more map fragments.

11. The vehicle apparatus of claim 10, wherein at least one map fragment of the two or more map fragments is one or more of:
received in association with the route and responsive to the apparatus providing a route request, wherein the route is determined in response to the route request; and
received based at least in part on the vehicle approaching the respective area.

12. The vehicle apparatus of claim 9, wherein one or more of:
it is determined that the vehicle is located within the area based at least in part on a determination that sensor data captured by the one or more sensors is not sufficient for operation of the vehicle apparatus in the sensor-based navigation mode;
it is determined that the vehicle has exited the area based at least in part on a determination that sensor data captured by the one or more sensors is sufficient for operation of the vehicle apparatus in the sensor-based navigation mode; and
it is determined that at least one of (a) the vehicle is located within the area or (b) the vehicle has exited the area based at least in part on a position estimate for the vehicle.

13. The vehicle apparatus of claim 9, wherein the map fragment is a portion of a high definition map that corresponds to the area along the route.

## Patentansprüche

1. Verfahren, umfassend:
basierend entweder auf einer Route (330), die ein mit einem Fahrzeug (5) gekoppeltes Fahrzeuggerät (20) voraussichtlich durchfahren wird, oder auf einem Standort des Fahrzeuggeräts, Bestimmen eines oder mehrerer Bereiche (310A, 310B) entweder entlang der Route oder in der Nähe des Standorts des Fahrzeuggeräts durch einen oder mehrere Prozessoren, wo erwartet wird, dass ein oder mehrere mit dem Fahrzeug gekoppelte Sensoren (29) nicht in der Lage sein werden, Sensordaten zu erfassen, die für einen autonomen Betrieb des Fahrzeugs in einem sensorbasierten Navigationsmodus ausreichen, und zwar aufgrund von mindestens einem von einer Topologie des befahrbaren Netzwerks in dem einen oder den mehreren Bereichen, einem oder mehreren statischen Merkmalen, die sich in dem einen oder den mehreren Bereichen befinden, und aktuellen oder erwarteten Fahrbedingungen in dem einen oder den mehreren Bereichen, wobei es sich bei den Fahrbedingungen um Bauereignisse, Verkehrsereignisse, die die Sicht auf verschiedene Sensoren blockieren, auftauchende Geschäfte auf dem Bürgersteig und/oder andere vorübergehende Situationen handelt, die nicht direkt mit dem Wetter zusammenhängen;
Zuordnen jedes der bestimmten ein oder mehreren Bereiche zu einem Auslöser und
als Reaktion auf das Bestimmen, dass ein Auslöser, der einem jeweiligen Bereich des einen oder der mehreren Bereiche entspricht, identifiziert wurde, Veranlassen des Fahrzeuggeräts durch den einen oder die mehreren Prozessoren, ein Kartenfragment zu erhalten, das dem jeweiligen Bereich entspricht, wobei das Kartenfragment konfiguriert ist, um von dem Fahrzeuggerät verwendet zu werden, um das Fahrzeug autonom zu betreiben, um den jeweiligen Bereich unter Verwendung eines kartenbasierten Navigationsmodus zu durchfahren.

2. Verfahren nach Anspruch 1, wobei das Kartenfragment ein Abschnitt einer hochauflösenden Karte ist, die dem jeweiligen Bereich entspricht.

3. Verfahren nach Anspruch 1, wobei das Fahrzeuggerät veranlasst wird, zwei oder mehrere Kartenfragmente zu erhalten, wobei jedes der zwei oder mehreren Kartenfragmente einem jeweiligen Bereich entspricht, und die zwei oder mehreren Kartenfragmente nicht über durchfahrbare Netzwerktopologiekartendaten der zwei oder mehreren Kartenfragmente miteinander verbunden sind.

4. Verfahren nach Anspruch 1, wobei das eine oder die mehreren Bereiche in Reaktion auf eine Routenanfrage bestimmt werden, wobei die Route in Reaktion auf die Routenanfrage bestimmt wird.

5. Verfahren nach Anspruch 1, wobei das Bestimmen, dass ein Auslöser, der einem jeweiligen Bereich des einen oder der mehreren Bereiche entspricht, identifiziert wurde, mindestens teilweise auf mindestens einem Standort des Fahrzeuggeräts oder einem vorhergesagten Standort des Fahrzeuggeräts basiert.

6. Verfahren nach Anspruch 1, wobei mindestens ein Bereich des einen oder der mehreren Bereiche als ein Bereich bestimmt wird, in dem erwartet wird, dass der eine oder die mehreren Sensoren nicht in der Lage sind, Sensordaten zu erfassen, die für den Betrieb des Geräts im sensorbasierten Navigationsmodus ausreichen, mindestens teilweise basierend auf Sensordaten, die von einem oder mehreren Sensoren innerhalb des mindestens einen Bereichs erfasst werden.

7. Nicht-transitorisches computerlesbares Speichermedium mit darin gespeicherten computerlesbaren Programmcodeabschnitten, wobei die computerlesbaren Programmcodeabschnitte ausführbare Abschnitte umfassen, die konfiguriert sind, um, wenn sie von einem Prozessor eines Geräts (10) ausgeführt werden, das Gerät zu veranlassen, das Verfahren nach einem der vorstehenden Verfahrensansprüche durchzuführen.

8. Netzwerkgerät (10), umfassend mindestens einen Prozessor (12) und mindestens einen Speicher (14), wobei der mindestens eine Speicher Computerprogrammcode speichert, wobei der mindestens eine Speicher und der Computerprogrammcode konfiguriert sind, um mit dem mindestens einen Prozessor zu bewirken, dass das Gerät das Verfahren nach einem der vorstehenden Ansprüche durchführt.

9. Fahrzeuggerät (20), umfassend mindestens einen Prozessor (22) und mindestens einen Speicher (24), wobei der mindestens eine Prozessor in Kommunikation mit einem oder mehreren Sensoren (29) steht, die mit einem Fahrzeug (5) gekoppelt sind, wobei der mindestens eine Speicher Computerprogrammcode speichert, wobei der mindestens eine Speicher und der Computerprogrammcode konfiguriert sind, um mit dem Prozessor das Gerät zu mindestens Folgendem zu veranlassen:
autonomes Betreiben mindestens eines Systems des Fahrzeugs, während das Fahrzeug entlang einer Route (330) durch mindestens einen Abschnitt eines durchfahrbaren Netzwerks in einem sensorbasierten Navigationsmodus navigiert;
Erhalten eines Kartenfragments, das einem Bereich (310A, 310B) entlang der Route entspricht, wobei erwartet wird, dass der eine oder die mehreren Sensoren nicht in der Lage sein werden, Sensordaten zu erfassen, die für einen autonomen Betrieb des mindestens einen Systems des Fahrzeugs in dem Bereich ausreichend sind, während es sich in dem sensorbasierten Navigationsmodus befindet, aufgrund von mindestens einem der Folgenden: einer Topologie des durchfahrbaren Netzwerks in dem Bereich, einem oder mehreren statischen Merkmalen, die sich in dem Bereich befinden, und aktuellen oder erwarteten Fahrbedingungen in dem Bereich, wobei es sich bei den Fahrbedingungen um Bauereignisse, Verkehrsereignisse, die die Sicht auf verschiedene Sensoren blockieren, auftauchende Geschäfte auf dem Bürgersteig und/oder andere vorübergehende Situationen handelt, die nicht direkt mit dem Wetter zusammenhängen;
als Reaktion auf das Bestimmen, dass sich das Fahrzeug innerhalb des Bereichs befindet, autonomes Betreiben des mindestens einen Systems des Fahrzeugs, während das Fahrzeug einen Abschnitt der Route innerhalb des Bereichs in einem kartenbasierten Navigationsmodus unter Verwendung von Kartendaten des Kartenfragments navigiert; und
als Reaktion auf das Bestimmen, dass das Fahrzeug den Bereich verlassen hat, autonomes Betreiben des mindestens einen Systems des Fahrzeugs, während das Fahrzeug entlang der Route im sensorbasierten Navigationsmodus weiter navigiert.

10. Fahrzeuggerät nach Anspruch 9,
wobei zwei oder mehrere Kartenfragmente in dem mindestens einen Speicher gespeichert sind, wobei jedes der zwei oder mehreren Kartenfragmente einem jeweiligen Bereich entspricht, und die zwei oder mehreren Kartenfragmente nicht über durchfahrbare Netzwerktopologiekartendaten der zwei oder mehreren Kartenfragmente miteinander verbunden sind.

11. Fahrzeuggerät nach Anspruch 10,
wobei mindestens ein Kartenfragment der zwei oder mehreren Kartenfragmente eines oder mehrere von Folgendem ist:
in Verbindung mit der Route und in Reaktion auf die von der Vorrichtung bereitgestellte Routenanforderung empfangen, wobei die Route in Reaktion auf die Routenanfrage bestimmt wird; und
mindestens teilweise basierend auf der Annäherung des Fahrzeugs an den jeweiligen Bereich empfangen.

12. Fahrzeuggerät nach Anspruch 9, wobei eines oder mehrere von Folgendem:
bestimmt wird, dass sich das Fahrzeug innerhalb des Gebiets befindet, mindestens teilweise basierend auf einer Bestimmung, dass die von dem einen oder den mehreren Sensoren erfassten Sensordaten für den Betrieb des Fahrzeuggeräts im sensorbasierten Navigationsmodus nicht ausreichend sind;
bestimmt wird, dass das Fahrzeug den Bereich verlassen hat, mindestens teilweise basierend auf einer Bestimmung, dass die von dem einen oder den mehreren Sensoren erfassten Sensordaten für den Betrieb des Fahrzeuggeräts in dem sensorbasierten Navigationsmodus ausreichend sind; und
bestimmt wird, dass sich das Fahrzeug mindestens entweder (a) innerhalb des Bereichs befindet oder (b) den Bereich mindestens teilweise basierend auf einer Positionsschätzung des Fahrzeugs verlassen hat.

13. Fahrzeuggerät nach Anspruch 9,
wobei das Kartenfragment ein Abschnitt einer hochauflösenden Karte ist, der dem Bereich entlang der Route entspricht.

## Revendications

1. Procédé comprenant :
sur la base soit d'un itinéraire (330) qu'un appareil de véhicule (20) couplé à un véhicule (5) est censé traverser, soit d'un emplacement de l'appareil de véhicule, la détermination, par un ou plusieurs processeurs, d'une ou plusieurs zones (310A, 310B) soit le long de l'itinéraire, soit à proximité de l'emplacement de l'appareil de véhicule, où il est prévu qu'un ou plusieurs capteurs (29) couplés au véhicule ne seront pas en mesure de capturer des données de capteur suffisantes pour le fonctionnement autonome du véhicule dans un mode de navigation basé sur des capteurs en raison d'au moins l'un parmi : une topologie du réseau traversable dans l'une ou plusieurs zones, une ou plusieurs caractéristiques statiques situées dans l'une ou plusieurs zones, et les conditions de conduite actuelles ou prévues dans l'une ou plusieurs zones, dans lequel les conditions de conduite sont des événements de construction, des événements de circulation qui bloquent la vue de divers capteurs, des boutiques de trottoir éphémères, et/ou d'autres situations temporaires qui ne sont pas directement liées aux conditions météorologiques ;
l'association de chacune de l'une ou plusieurs zones déterminées à un déclencheur et
en réponse à la détermination qu'un déclencheur correspondant à une zone respective de l'une ou plusieurs zones a été identifié, le fait d'amener, par l'un ou plusieurs processeurs, l'appareil de véhicule à obtenir un fragment de carte correspondant à la zone respective, dans lequel le fragment de carte est configuré pour être utilisé par l'appareil de véhicule afin de faire fonctionner de manière autonome le véhicule pour traverser la zone respective à l'aide d'un mode de navigation basé sur des cartes.

2. Procédé selon la revendication 1, dans lequel le fragment de carte est une partie d'une carte haute définition qui correspond à la zone respective.

3. Procédé selon la revendication 1, dans lequel l'appareil de véhicule est amené à obtenir deux ou plusieurs fragments de carte, chacun parmi les deux ou plusieurs fragments de carte correspondant à une zone respective, et les deux ou plusieurs fragments de carte ne sont pas connectés les uns aux autres par le biais de données de carte de topologie de réseau traversable des deux ou plusieurs fragments de carte.

4. Procédé selon la revendication 1, dans lequel l'une ou plusieurs zones sont déterminées en réponse à une demande d'itinéraire, dans lequel l'itinéraire est déterminé en réponse à la demande d'itinéraire.

5. Procédé selon la revendication 1, dans lequel la détermination qu'un déclencheur correspondant à une zone respective de l'une ou plusieurs zones a été identifié est basée au moins en partie sur au moins l'un parmi un emplacement de l'appareil de véhicule ou un emplacement prédit de l'appareil de véhicule.

6. Procédé selon la revendication 1, dans lequel au moins une zone parmi l'une ou plusieurs zones est déterminée comme une zone où il est prévu que l'un ou plusieurs capteurs ne seront pas en mesure de capturer des données de capteur suffisantes pour le fonctionnement de l'appareil dans le mode de navigation basé sur des capteurs sur la base au moins en partie des données de capteur capturées par un ou plusieurs capteurs à l'intérieur de l'au moins une zone.

7. Support de stockage lisible par ordinateur non transitoire ayant des parties de code de programme lisibles par ordinateur stockées dans celui-ci, les parties de code de programme lisibles par ordinateur comprenant des parties exécutables configurées pour, lorsqu'elles sont exécutées par un processeur d'un appareil (10), amener l'appareil à réaliser le procédé selon l'une quelconque des revendications de procédé précédentes.

8. Appareil réseau (10) comprenant au moins un processeur (12) et au moins une mémoire (14), l'au moins une mémoire stockant un code de programme informatique, l'au moins une mémoire et le code de programme informatique configurés pour, avec l'au moins un processeur, amener l'appareil à réaliser le procédé selon l'une quelconque des revendications précédentes.

9. Appareil de véhicule (20) comprenant au moins un processeur (22) et au moins une mémoire (24), l'au moins un processeur en communication avec un ou plusieurs capteurs (29) couplés à un véhicule (5), l'au moins une mémoire stockant un code de programme informatique, l'au moins une mémoire et le code de programme informatique configurés pour, avec le processeur, amener l'appareil à au moins :
faire fonctionner de manière autonome au moins un système du véhicule lorsque le véhicule navigue le long d'un itinéraire (330) à travers au moins une partie d'un réseau traversable dans un mode de navigation basé sur des capteurs ;
obtenir un fragment de carte correspondant à une zone (310A, 310B) le long de l'itinéraire, où il est prévu que l'un ou plusieurs capteurs ne seront pas en mesure de capturer des données de capteur suffisantes pour le fonctionnement autonome de l'au moins un système du véhicule dans la zone en mode de navigation basé sur des capteurs en raison d'au moins l'un parmi : une topologie du réseau traversable dans la zone, une ou plusieurs caractéristiques statiques situées dans la zone, et les conditions de conduite actuelles ou prévues dans la zone, dans lequel les conditions de conduite sont des événements de construction, des événements de circulation qui bloquent la vue de divers capteurs, des boutiques de trottoir éphémères et/ou d'autres situations temporaires qui ne sont pas directement liées aux conditions météorologiques ;
en réponse à la détermination que le véhicule est situé à l'intérieur de la zone, faire fonctionner de manière autonome l'au moins un système du véhicule lorsque le véhicule navigue sur une partie de l'itinéraire à l'intérieur de la zone dans un mode de navigation basé sur des cartes à l'aide des données de carte du fragment de carte ; et
en réponse à la détermination que le véhicule a quitté la zone, faire fonctionner de manière autonome l'au moins un système du véhicule lorsque le véhicule continue à naviguer le long de l'itinéraire dans le mode de navigation basé sur des capteurs.

10. Appareil de véhicule selon la revendication 9,
dans lequel deux ou plusieurs fragments de carte sont stockés par l'au moins une mémoire, chacun parmi les deux ou plusieurs fragments de carte correspondant à une zone respective, et les deux ou plusieurs fragments de carte ne sont pas connectés les uns aux autres par le biais de données de carte de topologie de réseau traversable des deux ou plusieurs fragments de carte.

11. Appareil de véhicule selon la revendication 10,
dans lequel au moins un fragment de carte parmi les deux ou plusieurs fragments de carte est un ou plusieurs parmi un fragment :
reçu en association avec l'itinéraire et en réponse à l'appareil fournissant une demande d'itinéraire, dans lequel l'itinéraire est déterminé en réponse à la demande d'itinéraire ; et
reçu sur la base au moins en partie du véhicule approchant la zone respective.

12. Appareil de véhicule selon la revendication 9, dans lequel un ou plusieurs parmi :
il est déterminé que le véhicule est situé à l'intérieur de la zone sur la base au moins en partie d'une détermination selon laquelle les données de capteur capturées par l'un ou plusieurs capteurs ne sont pas suffisantes pour le fonctionnement de l'appareil de véhicule dans le mode de navigation basé sur des capteurs ;
il est déterminé que le véhicule a quitté la zone sur la base au moins en partie d'une détermination selon laquelle les données de capteur capturées par l'un ou plusieurs capteurs sont suffisantes pour le fonctionnement de l'appareil de véhicule dans le mode de navigation basé sur des capteurs ; et
il est déterminé qu'au moins l'un parmi (a) le véhicule est situé à l'intérieur de la zone ou (b) le véhicule a quitté la zone sur la base au moins en partie d'une estimation de position pour le véhicule.

13. Appareil de véhicule selon la revendication 9,
dans lequel le fragment de carte est une partie d'une carte haute définition qui correspond à la zone le long de l'itinéraire.
